# FASCICULE DE BREVET EUROPEEN

(11) **EP 4 081 768 B1**
(45) Date de publication et mention de la délivrance du brevet: **07.06.2023**
(21) Numéro de dépôt: 21725569.4
(22) Date de dépôt: 15.04.2021
(51) Int. Cl.: G01G 19/44

(54) **DISPOSITIF ET PROCÉDÉ DE PESAGE**
WÄGEVORRICHTUNG UND VERFAHREN
WEIGHING APPARATUS AND METHOD

(30) Priorité: 16.04.2020 FR 2003832
(43) Date de publication de la demande: 02.11.2022
(73) Titulaire: Withings, 92130 Issy-Les-Moulineaux (FR)
(72) Inventeur: CUNIASSE, Pierre-Antoine, 92130 ISSY LES MOULINEAUX (FR); FAUSSARD, Guillaume, 92130 ISSY LES MOULINEAUX (FR); PREMEL, Xavier, 92130 ISSY LES MOULINEAUX (FR)
(74) Mandataire: Withings IP
(86) Numéro de dépôt international: PCT/FR2021/050661
(87) Numéro de publication internationale: WO 2021/209720

(56) Documents cités:
- WO-A1-2014/013208

## Description

### Domaine technique

La présente divulgation relève des dispositifs et procédés de pesage. Plus particulièrement, la présente divulgation relève du domaine des pèses personnes électroniques.

### Technique antérieure

Les pèses personnes électroniques, également appelés balances, sont couramment équipés de quatre pieds, chacun de ces pieds comprenant une cellule de charge. Une telle configuration permet de mesurer le poids d'un utilisateur lorsque celui-ci se place sur la balance.

Classiquement, les cellules de charge de la balance sont agencées dans un montage de type pont de Wheatstone. Alors, les charges mesurées par chacune des cellules de charge peuvent être exploitées pour estimer le poids d'un utilisateur.

Néanmoins, il a été constaté que lorsque les charges mesurées par chacune des cellules de charge ne sont pas égales, l'estimation du poids de l'utilisateur peut varier. Cette variabilité est notamment due aux imperfections du montage utilisé, ainsi qu'à un décentrage de l'utilisateur sur la balance.

Ainsi, le document WO2014/013208 décrit un montage des cellules de charge optimisé, pour établir le poids d'un utilisateur ainsi que de mesurer son décentrage sur la balance. Le montage comporte deux ponts de Wheatstone distincts, chacun comprenant deux cellules de charge reliées à un amplificateur dédié. Le décentrage mesuré est transmis à l'utilisateur, lui permettant de se de se recentrer pour améliorer l'estimation de son poids.

Ce montage permet effectivement d'estimer un décentrage de l'utilisateur. Cependant, ce montage nécessite deux ponts de Wheatstone, reliés à deux amplificateurs, ce qui entraine une augmentation de la consommation d'énergie liée à la pesée. De plus, il a été constaté que, selon l'agencement des cellules de charge dans les ponts de Wheatstone, l'estimation d'un décentrage selon la direction avant/arrière ou la direction droite/gauche demeure imprécise et améliorable. En outre, ce montage nécessite une intervention de l'utilisateur, qui doit se pencher ou se repositionner pour corriger son décentrage.

Il existe donc un besoin pour une balance permettant de réduire l'influence du décentrage d'un utilisateur ne présentant pas les inconvénients de l'art antérieur.

Par ailleurs, il existe des dispositifs, par exemple la Wii Balance Board, de Nintendo, exploitant le décentrage de l'utilisateur pour interagir avec une plateforme, par exemple pour jouer à des jeux. Néanmoins, ce type de dispositif utilise quatre ponts de Wheatstone, entrainant un coût de production important.

### Résumé

Il est proposé un dispositif de pesage de type pèse-personne électronique comprenant quatre pieds, respectivement antérieur gauche, antérieur droit, postérieur gauche et postérieur droit, le pied antérieur gauche comprenant une cellule de charge antérieure gauche, le pied antérieur droit comprenant une cellule de charge antérieure droite, le pied postérieur gauche comprenant une cellule de charge postérieure gauche et le pied postérieur droit comprenant une cellule de charge postérieure droite,
chaque cellule de charge comportant au moins deux résistances,
les cellules de charge étant combinées dans un montage de type pont de Wheatstone comportant :
   - une première branche, et une deuxième branche, les première et deuxième branches étant montées en parallèle entre une tension de référence et un potentiel de masse, les première et deuxième branches étant disposées de part et d'autre d'un premier axe de symétrie traversant la tension de référence et le potentiel de masse;
   - un premier point intermédiaire, sur la première branche, et un second point intermédiaire, sur la deuxième branche, la première et seconde branche comportant un même nombre de résistances de part et d'autre du premier et du deuxième point intermédiaire, respectivement, pour définir un deuxième axe de symétrie traversant les premier et second points intermédiaires; et
   - un premier circuit auxiliaire, configuré pour sélectivement court-circuiter deux résistances appartenant à un même pied ou à deux pieds voisins (appelés premier(s) pied(s)) dans le pèse personne, le premier circuit auxiliaire étant symétrique selon le premier axe ou le deuxième axe,
le montage étant commandé par une unité de commande électronique pour estimer un poids et pour estimer un décentrage d'un utilisateur sur le pèse personne.

Avantageusement, un tel montage permet de modifier la contribution d'une cellule de charge sur une mesure de signal de sortie du montage. En effet, au travers plusieurs mesures de signal de sortie avec des contributions différentes, il apparait possible de remonter à une estimation de poids et de décentrage d'un utilisateur sur le pèse personne. Ainsi, il apparait possible d'estimer le poids de l'utilisateur affranchi du décentrage, sans intervention de ce dernier. En outre, il apparait possible d'exploiter le décentrage dynamiquement pour permettre à l'utilisateur d'interagir avec la balance, pour nettoyer un signal de ballistocardiographie (BCG) et/ou pour étudier l'équilibre de l'utilisateur. Le montage proposé permet en outre une réduction des composants et de l'énergie nécessaire au pèse-personne pour son fonctionnement.

Les caractéristiques exposées dans les paragraphes suivants peuvent, optionnellement, être mises en oeuvre. Elles peuvent être mises en oeuvre indépendamment les unes des autres ou en combinaison les unes avec les autres.

Le montage peut comporter un deuxième circuit auxiliaire, le deuxième circuit auxiliaire étant configuré pour court-circuiter deux résistances appartenant à un même deuxième pied ou à deux deuxièmes pieds voisins dans le pèse personne, le deuxième circuit auxiliaire étant symétrique selon le premier axe ou le deuxième axe., En particulier, au moins une résistance court-circuitée par le premier circuit auxiliaire et au moins une résistance court-circuitée par le deuxième circuit auxiliaire appartiennent à deux pieds voisins.

Ainsi, par l'exploitation de deux circuits auxiliaires, trois mesures de signal de sortie du montage peuvent être effectuées, chacune avec des contributions de cellules de charge différentes. Alors, il est possible de remonter algébriquement à une valeur de poids, de décentrage de l'utilisateur sur le pèse personne selon la direction avant/arrière et selon la direction droite/gauche.

Le montage peut comporter un troisième circuit auxiliaire, le troisième circuit auxiliaire étant symétrique selon le premier axe ou le deuxième axe, les premier, deuxième et troisième circuits auxiliaires étant configurés pour concerner trois parmi les quatre cellules de charge. Cela signifie que les premier, deuxième et troisième circuits auxiliaires sont configurés pour qu'ils court-circuitent trois parmi les quatre cellules de charge ou pour qu'ils court-circuitent au moins une résistance de trois cellules de charge parmi les quatre cellules de charge.

Ainsi, le troisième circuit auxiliaire peut permettre une quatrième mesure du signal de sortie du montage, chacune des mesures ayant des contributions de cellules de charge différentes. Il est alors possible de remonter, outre le poids et les décentrages, à une valeur de torsion de la plaque sur laquelle sont montées les cellules de charge du pèse personne.

L'ensemble des résistances concernées par les court-circuits du ou des circuits auxiliaires peuvent appartenir à au moins deux cellules de charge distinctes.

Le ou chaque circuit auxiliaire peut comporter au moins un interrupteur, par exemple un transistor, commandé par l'unité de commande électronique. L'interrupteur peut aussi être un optocoupleur.

Ainsi, le ou chaque circuit auxiliaire peut être sélectivement commandé dans un état ouvert ou un état fermé, pour former un court-circuit. Alors, plusieurs mesures peuvent être effectuées sur le signal de sortie.

Le ou chaque circuit auxiliaire peut comporter deux interrupteurs, de préférences deux transistors, commandés par l'unité de commande électronique.

Un transistor n'étant pas parfaitement symétrique, cette configuration permet une meilleure symétrie du montage.

Le ou chaque circuit auxiliaire peut être relié à au moins l'un parmi : la tension de référence, le potentiel de masse, le premier point intermédiaire ou le deuxième point intermédiaire. Lorsque le circuit auxiliaire est relié à la tension de référence ou au potentiel de masse, on observe une réduction du rapport signal sur bruit (SNR), en alimentant le reste du pont à la tension de référence lors du court-circuit.

Les points intermédiaires peuvent être raccordés à un unique amplificateur pour obtenir un signal de sortie du montage.

Cette configuration permet d'obtenir un signal de sortie exploitable par l'unité de commande électronique pour estimer le poids et le décentrage de l'utilisateur. En outre, l'unique amplificateur permet une meilleure efficacité énergétique du dispositif, ne nécessitant qu'un seul amplificateur pour obtenir un signal de sortie exploitable.

Le dispositif peut comprendre un afficheur, configuré pour afficher des informations à un utilisateur. L'utilisateur peut ainsi être informé des mesures effectuées par la balance, notamment son poids. L'afficheur permet en outre une interaction de l'utilisateur avec la balance.

Le dispositif peut comprendre un module de communication configuré pour échanger des données avec un smartphone et/ou un serveur. Ainsi, l'utilisateur peut accéder aux mesures effectuées par le pèse personne à distance du pèse personne. Un suivi de mesure peut être effectué. Le pèse-personne peut également recevoir des données complémentaires depuis le serveur et/ou le smartphone, par exemple sur l'utilisateur sur le pèse personne.

Selon un autre aspect, il est proposé un procédé mis en oeuvre dans le dispositif de pesage, comprenant :
- Effectuer une première mesure de signal de sortie du montage ;
- Commander le premier circuit auxiliaire à l'état fermé ;
- Effectuer une deuxième mesure de signal de sortie du montage ;
- Etablir un poids et un décentrage d'un utilisateur à partir des première et deuxième mesures.

Ce procédé permet d'effectuer des mesures du signal de sortie du montage avec des contributions de cellules de charge différentes. Le signal de sortie de chaque mesure peut être exploité par le pèse personne pour établir le poids et le décentrage de l'utilisateur. Le poids peut être transmis à l'utilisateur, et le décentrage peut permettre de nettoyer le signal BCG, d'étudier l'équilibre d'un utilisateur et/ou de permettre à l'utilisateur d'interagir avec le pèse personne.

Les caractéristiques exposées dans les paragraphes suivants peuvent, optionnellement, être mises en oeuvre. Elles peuvent être mises en oeuvre indépendamment les unes des autres ou en combinaison les unes avec les autres.

Le procédé peut comporter, après la deuxième mesure :
- Commander le deuxième circuit auxiliaire à l'état fermé;
- Effectuer une troisième mesure du signal de sortie du montage ;
- Etablir un poids, un décentrage avant-arrière et un décentrage droite-gauche d'un utilisateur à partir des première, deuxième et troisième mesures.

Le procédé peut comporter, après la deuxième mesure :
- Commander le deuxième circuit auxiliaire à l'état fermé ;
- Effectuer une troisième mesure du signal de sortie du montage ;
- Etablir un poids d'un utilisateur et la flexion d'une plaque du dispositif de pesage à partir des première, deuxième et troisième mesures.

Avec la troisième mesure, il est possible de remonter algébriquement à une valeur de poids, de décentrage de l'utilisateur sur le pèse personne selon la direction avant/arrière et selon la direction droite/gauche.

Le procédé peut comprendre, après la troisième mesure :
- Commander le troisième circuit auxiliaire à l'état fermé ;
- Effectuer une quatrième mesure du signal de sortie du montage ;
- Établir le poids, le décentrage avant arrière, le décentrage droite-gauche d'un utilisateur et une torsion d'une plaque du dispositif de pesage, à partir des première, deuxième, troisième et quatrième mesures.

Avec la quatrième mesure, il est possible de d'estimer la torsion de la plaque prenant place lors des mesures. Estimer la torsion peut améliorer la précision du poids et des décentrages. Estimer la torsion peut également réduire les besoins de rigidité de la plaque sans impacter la précision du poids et des décentrages.

Le poids, le décentrage avant-arrière et le décentrage droite-gauche peuvent être calculés en multipliant un vecteur, composé des première, deuxième et troisième mesures, par une matrice de passage.

La matrice de passage peut être obtenue par un calcul théorique.

La matrice de passage peut être obtenue expérimentalement. Ceci permet d'améliorer la précision de la matrice de passage.

Le poids peut être affiché à un utilisateur.

Le décentrage avant-arrière et/ou le décentrage droite-gauche peut permettre au moins l'un parmi : une interaction du pèse personne avec un utilisateur, un nettoyage de signal de ballistocardiographie (BCG) et/ou une étude de l'équilibre de l'utilisateur sur le pèse personne.

L'ordre des mesures n'a pas d'importance particulière.

Le procédé décrit peut en outre comprendre une étape de contrôle d'un système électronique à l'aide de l'information de décentrage obtenue. De la sorte, le dispositif de pesage peut être utilisé comme contrôleur d'un système électronique. Le système électronique peut comprendre le dispositif de pesage lui-même, un ordinateur (séparé) ou une console de jeu.

Les mesures effectuées par le pèse personnes peuvent être envoyées vers un smartphone et/ou un serveur. Ainsi, l'utilisateur peut accéder aux mesures effectuées par le pèse personne à distance du pèse personne. Un suivi de mesure peut être effectué.

### Brève description des dessins

D'autres caractéristiques, détails et avantages apparaîtront à la lecture de la description détaillée ci-après, et à l'analyse des dessins annexés, sur lesquels :
[Fig. 1] est une vue générale du dispositif de pesage, vue du dessus, selon l'invention ;
[Fig. 2a] montre un premier affichage sur un afficheur du dispositif de pesage de la figure 1 ;
[Fig. 2b] montre un deuxième affichage sur l'afficheur du dispositif de pesage de la figure 1 ;
[Fig. 2c] montre un troisième affichage sur l'afficheur du dispositif de pesage de la figure 1 ;
[Fig. 3] montre un premier mode de réalisation de schéma électrique de principe du dispositif de pesage de la figure 1, dans un premier mode de fonctionnement ;
[Fig. 4] montre le schéma électrique de la figure 3 dans un deuxième mode de fonctionnement ;
[Fig. 5] montre le schéma électrique de la figure 3 dans un troisième mode de fonctionnement ;
[Fig. 6] montre une variante du schéma électrique de principe du dispositif de pesage de la figure 3 ;
[Fig. 7] montre une autre variante du schéma électrique de principe du dispositif de pesage de la figure 3 ;
[Fig. 8A] montre d'autres variantes du schéma électrique de principe du dispositif de pesage de la figure 3 ;
[Fig. 8B] montre d'autres variantes du schéma électrique de principe du dispositif de pesage de la figure 3 ;
[Fig. 9] montre un deuxième mode de réalisation de schéma électrique de principe du dispositif de pesage de la figure 1 ;
[Fig. 10] montre des variantes du schéma électrique de principe du dispositif de pesage de la figure 9 ;
[Fig. 11] montre un troisième mode de réalisation de schéma électrique de principe du dispositif de pesage de la figure 1 ;
[Fig. 12] montre un quatrième mode de réalisation de schéma électrique de principe du dispositif de pesage de la figure 1 ;
[Fig. 13] montre un organigramme du procédé mis en oeuvre par le dispositif de pesage de la figure 1 ;
[Fig. 14] montre un exemple de calcul matriciel pour obtenir le poids et les décentrages ;
[Fig. 15A] montre un cinquième mode de réalisation de schéma électrique de principe du dispositif de pesage de la figure 1 ;
[Fig. 15B] montre une variante du schéma électrique illustré à la figure 15 ;
[Fig. 16] montre schématiquement une vue en perspective d'un sous-ensemble du dispositif de pesage de la figure 1 ;
[Fig. 17] montre un organigramme du procédé mis en oeuvre par le dispositif de pesage de la figure 1.

### Description des modes de réalisation

Sur les différentes figures, les mêmes références désignent des éléments identiques ou similaires.

### 1. Forme générale du pèse personne

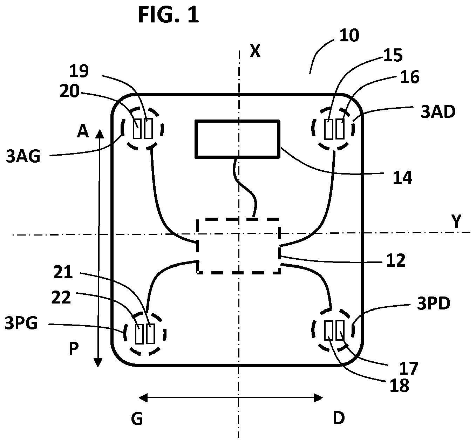

La figure 1 représente un exemple de dispositif de pesage 10 selon une forme de réalisation de l'invention.

Ce dispositif de pesage 10 se présente, dans l'exemple illustré, comme un pèse-personne électronique, ou balance, sur lequel peut se placer un utilisateur pour mesurer notamment son poids.

Le pèse-personne électronique 10 comprend un corps principal de forme générale rectangulaire ou carrée et quatre pieds disposés respectivement au voisinage des quatre coins du corps, chaque pied comprenant des moyens de mesure.

En variante, le pèse-personne pourrait avoir une forme ronde ou ovale. Dans ce cas, les quatre pieds sont régulièrement répartis autour de l'axe médian du pèse personne, chaque pied comprenant les moyens de mesure.

Plus précisément, le pied antérieur gauche comprend une cellule de charge antérieure gauche 3AG, le pied antérieur droit comprend une cellule de charge antérieure droite 3AD, le pied postérieur gauche comprend une cellule de charge postérieure gauche 3PG et le pied postérieur droit comprend une cellule de charge postérieure droite 3PD.

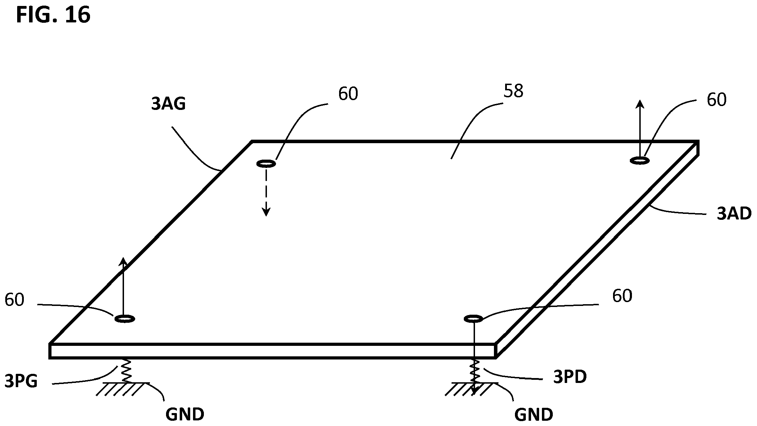

On note que, comme visible sur la figure 16, les cellules de charges susmentionnées sont agencées sur une plaque 58 prévue dans le pèse personne électronique 10. Chaque cellule de charge s'étend entre un point de contact 60 avec la plaque 58 et le sol GND. Ainsi, chaque cellule de charge effectue une mesure relative au plan principal d'extension de la plaque 58. La plaque 58 reprend directement le poids de l'utilisateur. Dans un mode de réalisation, la plaque 58 est la plaque sur laquelle monte l'utilisateur.

Sur la figure 1, la direction antéro-postérieure est référencée par l'axe X, la lettre A désignant l'avant et la lettre P désignant l'arrière, alors que la direction droite-gauche est référencée par l'axe Y, s'étendant entre le côté gauche dénoté G et le côté droite dénoté D.

S'agissant des cellules de charge déjà mentionnées, on choisira de préférence des cellules de charge comprenant deux jauges de déformation du type connu, en particulier des jauges comprenant un premier élément dont la résistance augmente sous l'effet d'une compression verticale appliquée au pied considéré et un deuxième élément dont la résistance diminue sous l'effet de ladite compression verticale.

Dans l'exemple illustré ici, la cellule de charge antérieure droite 3AD comprend un tel premier élément appelé première résistance avant droite 15, et un tel deuxième élément appelé deuxième résistance avant droite 16.

De façon analogue, la cellule de charge postérieure droite 3PD comprend un tel premier élément appelé première résistance arrière droite 17, et un tel deuxième élément appelé deuxième résistance arrière droite18.

De même pour le côté gauche, la cellule de charge antérieure gauche 3AG comprend un tel premier élément appelé première résistance avant gauche 19, et un tel deuxième élément appelé deuxième résistance avant gauche 20.

Enfin, la cellule de charge postérieure gauche 3PG comprend un tel premier élément appelé première résistance arrière gauche 21, et un tel deuxième élément appelé deuxième résistance arrière gauche 22.

Par « voisins », il est signifié deux pieds ou cellules de charge qui partagent une caractéristique « antérieure/postérieure » ou « gauche/droite ». Par exemple, les voisins de la cellule de charge 3AG sont les cellules de charge 3AD et 3PG. Sur une architecture à quatre pieds ou cellules de charge, seuls les pieds ou les cellules de charge en diagonale l'un(e) de l'autre ne sont pas voisin(e)s.

Le pèse-personne électronique 10 comprend en outre une unité de commande électronique 12 et un afficheur 14.

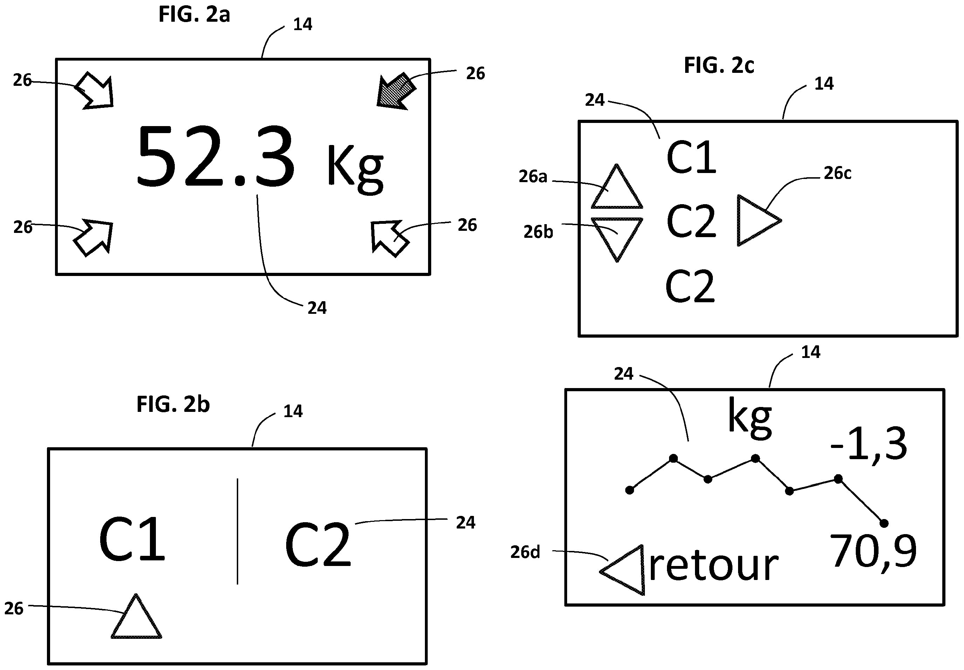

Comme représenté sur les figures 2a à 2c, l'afficheur 14 peut afficher des informations 24, par exemple le poids estimé pour l'objet ou le nom de l'utilisateur présent sur le pèse-personne 10. De plus, l'afficheur 14 peut afficher un ou plusieurs indicateurs 26. La fonction de ces indicateurs est de permettre à l'utilisateur d'interagir avec le pèse personne en fonction d'un décentrage de position par rapport à une position idéale centrée pour laquelle les efforts sont substantiellement équitablement répartis sur les quatre pieds du pèse-personne.

Dans l'exemple de la figure 2a, l'afficheur 14 affiche le poids 24 estimé pour l'objet ou l'utilisateur présent sur le pèse-personne 10. L'afficheur affiche quatre indicateurs 26, sous forme de flèches. Les indicateurs peuvent indiquer à l'utilisateur présent sur le pèse-personne la direction dans laquelle se pencher pour arriver à la position idéale centrée.

Dans l'exemple de la figure 2b, l'afficheur affiche deux options C1, C2. Les options peuvent par exemple être deux utilisateurs différents, ou deux réponses à une question affichée préalablement. L'afficheur affiche un indicateur 26, pour permettre à l'utilisateur de sélectionner parmi les deux options en fonction du décentrage selon la direction droite/gauche. L'utilisateur pourra se pencher vers la droite ou la gauche pour changer sa sélection.

Dans l'exemple de la figure 2c, l'afficheur affiche une liste d'options C1, C2, C3. La liste peut consister des différentes fonctionnalités du pèse personne, par exemple afficher la météo, afficher un historique de pesée ou accéder aux réglages. La liste peut également être une pluralité de réponses possible à une question affichée préalablement.

L'afficheur comporte alors des indicateurs « *avant* » 26a et « *arrière* » 26b, pour permettre à l'utilisateur de naviguer parmi les options. L'utilisateur pourra se pencher vers l'avant pour monter dans la liste, et vers l'arrière pour descendre.

L'afficheur comporte également des indicateurs « *droite*» 26c et « *gauche*» 26d pour permettre à l'utilisateur de sélectionner une option ou de revenir à la liste. L'utilisateur pourra se pencher vers la droite pour sélectionner une option, ou la gauche pour revenir en arrière.

Pour chacun des exemples décrits ci-avant, on pourra activer un indicateur pour indiquer à l'utilisateur la direction à suivre pour corriger le décentrage constaté, ou pour naviguer et sélectionner parmi les options. L'activation de l'indicateur peut consister à le faire clignoter, l'allumer alors que les autres restent éteintes, le déplacer dans l'afficheur ou toute autre manière.

Bien entendu, d'autres types d'affichages permettant d'afficher des informations et d'interagir avec le pèse personne en fonction du décentrage peuvent être mis en oeuvre.

### 2. Pont de Wheatstone

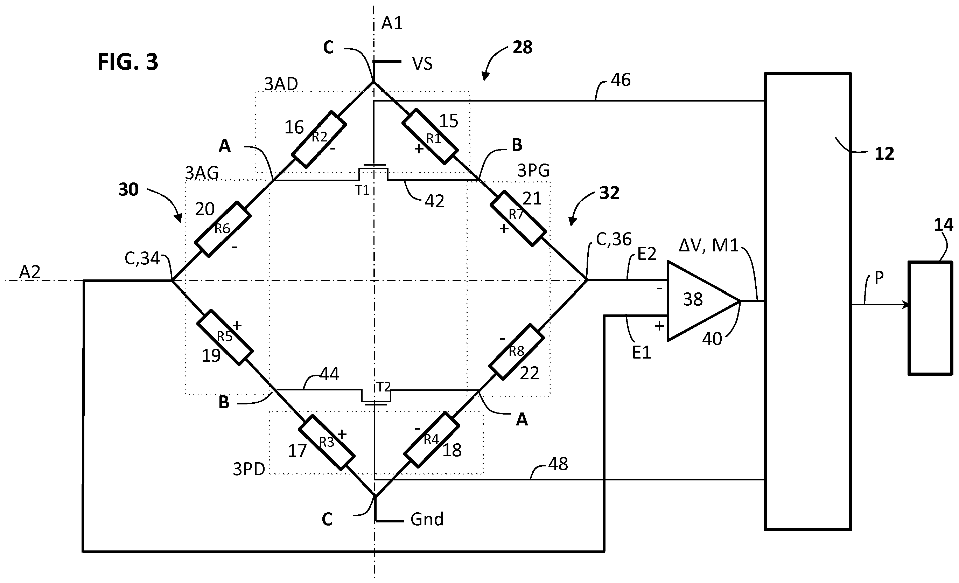

En se tournant vers la figure 3, un schéma électrique du principe du pèse-personne comprend un montage 28 de type pont de Wheatstone, qui combine les résistances 15 à 22 des quatre cellules de charge.

Chacune des résistances 15-22 présente respectivement une valeur de résistance notée R1-R8. Dans l'exemple illustré ici, les résistances impaires, ou résistances à sensibilité positive (ci-après résistances positives), augmentent avec l'effort vertical de compression appliqué sur les pieds, alors qu'à l'inverse les résistances paires, ou résistances à sensibilité négative (ci-après résistances négatives), diminuent avec l'effort appliqué.

Dans un exemple type, on choisit les résistances avec la même valeur nominale par exemple 500 ohms ou 1 kilo ohms (1 kΩ).

En outre, les résistances impaires définissent un pôle négatif A de la cellule de charge, et les résistances paires définissent un pôle positif B. Un troisième pôle C, sépare les résistances paires et impaires de chaque cellule de charge. Autrement dit le pôle C est le point milieu de la cellule de charge.

Dans le montage 28 de type pont de Wheatstone, les pôles négatifs A des résistances paires sont joints entre eux et les pôles négatifs B des résistances impaires sont joints entre eux pour former un quadrilatère, d'extrémités les quatre pôles C des cellules de charge.

Par ailleurs, deux pôles C, opposés dans le quadrilatère, sont reliés respectivement à une tension de référence Vs et un potentiel de masse GND. Ainsi, le montage 28 de type pont de Wheatstone définit une première branche 30 et une deuxième branche 32, montées en parallèles entre la tension de référence Vs et le potentiel de masse GND.

La tension de référence Vs est issue d'une source de tension stabilisée à une valeur prédéterminée constante, par exemple 2,8 V dans l'exemple considéré. En variante, le montage pourrait également être alimenté par une source de courant.

Dans l'exemple illustré, la première branche 30 relie, en série :
- la tension de référence Vs au pôle C de la cellule de charge antérieure droite 3AD ;
- le pôle négatif A de la cellule de charge antérieure droite 3AD au pôle négatif A de la cellule de charge antérieure gauche 3AG ;
- le pôle positif B de la cellule de charge antérieure gauche 3AG au pôle positif B de la cellule de charge postérieure droite 3PD ; et
- le pôle C de la cellule de charge postérieure droite 3PD au potentiel de masse.

Similairement, la deuxième branche 32 relie, en série :
- la tension de référence Vs au pôle C de la cellule de charge antérieure droite 3AD ;
- le pôle positif B de la cellule de charge antérieure droite 3AD au pôle positif B de la cellule de charge postérieure gauche 3PG ;
- le pôle négatif A de la cellule de charge postérieure gauche 3PG au pôle négatif A de la cellule de charge postérieure droite 3PD ; et
- le pole C de la cellule de charge postérieure droite 3PD au potentiel de masse.

Les deux pôles C restants, non reliés à la tension de référence ou au potentiel de masse, définissent des points intermédiaires 34 et 36. On prélève les tensions respectives présentes sur les premier et second points intermédiaires, en s'intéressant particulièrement à la différence de potentiel entre ces deux points intermédiaires, comme il sera vu plus loin.

Tel qu'illustré, les premier et deuxième points intermédiaires 34, 36 sont définis par les pôles C des cellules de charge antérieure gauche 3AG et postérieure gauche 3PG respectivement.

Il est à noter que les cellules de charge pourraient être montées différemment que l'exemple illustré. Un pôle C d'une cellule de charge quelconque pourrait être relié à la tension de référence, au potentiel de masse ou former l'un des points intermédiaires. Néanmoins, on respectera les contraintes suivantes :
- chacune des deux branches 30, 32 comportent un même nombre de résistances positives et de résistances négatives;
- les points intermédiaires 34, 36 séparent d'une part les résistances négatives et d'autre part les résistances positives de chacune des branches.

Ainsi, il apparait possible de définir un premier axe de symétrie A1 et un deuxième axe de symétrie A2.

Le premier axe de symétrie A1 passe par le point de connexion de la tension de référence et le point de connexion du potentiel de masse et comporte d'une part la première branche 30 et d'autre part la deuxième branche 32.

Le deuxième axe de symétrie A2 passe par les premier et deuxième points intermédiaires 34, 36 et comporte d'une part les résistances négatives de la première branche 30 et les résistances positives de la deuxième branche 32 et, d'autre part, les résistances positives de la première branche 30 et les résistances négatives de la deuxième branche 32.

Les premier et deuxième points intermédiaires 34, 36 sont reliés à un amplificateur 38, dont le rôle est d'amplifier la différence de potentiel entre les deux points intermédiaires, et de délivrer ces valeurs amplifiées sur une sortie 40 reliée à l'unité de commande 12.

La tension prélevée sur le premier point intermédiaire est notée Ed1, la tension prélevée sur le deuxième point intermédiaire est notée Ed2, la tension prélevée à la sortie de l'amplificateur 38, soit le signal de sortie, est notée ΔV. On a alors l'équation ΔV = G(Ed1-Ed2), G étant le gain de l'amplificateur.

Le montage décrit ci-avant permet alors de monter les quatre cellules de charge dans un unique pont de Wheatstone, et ne nécessite qu'un seul amplificateur. Le nombre de composants du montage et l'énergie nécessaire pour réaliser une mesure du signal de sortie sont réduits, notamment vis-à-vis du document WO2014/013208, dans lequel deux ponts de Wheatstone sont associés à deux amplificateurs.

### 3. Circuits auxiliaires

Par ailleurs, le montage 28 de type pont de Wheatstone comporte un premier circuit auxiliaire 42. Tel qu'illustré, le premier circuit auxiliaire 42 est raccordé d'une part au pôle négatif A la cellule de charge antérieure droite 3AD et, d'autre part, au pôle positif B de la cellule de charge antérieure droite 3AD.

On notera que le premier circuit auxiliaire 42 est symétrique par rapport au premier axe de symétrie A1. Alors, le montage est équilibré. On évite une saturation de l'amplificateur 38.

Le premier circuit auxiliaire 42 comporte ici un transistor T1. Lorsque le transistor T1 est ouvert (également dit 'au repos' ou 'OFF'), l'impédance du circuit auxiliaire est infinie, et aucun courant ne traverse le circuit auxiliaire. Le signal de sortie ΔV n'est pas influencé par le premier circuit auxiliaire.

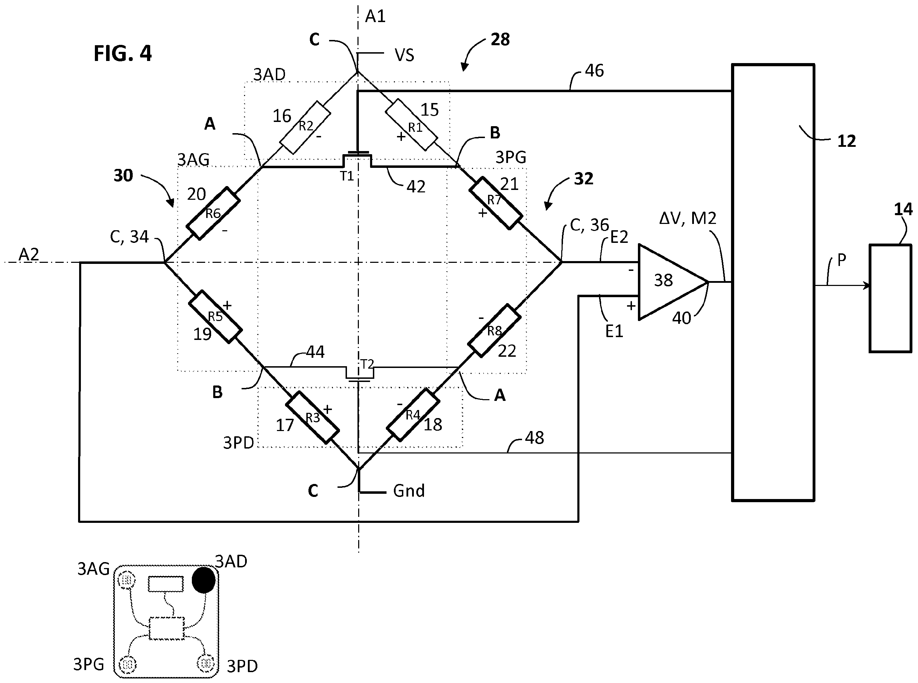

En revanche, lorsque le transistor T1 est fermé, il devient équivalent à un fil. Alors, comme visible sur la figure 4, un court-circuit se forme entre les pôles positifs B et négatifs A de la cellule de charge antérieure droite 3AD. Alors, le montage comporte un court-circuit qui annule la contribution des résistances 15 et 16 de la cellule de charge antérieure droite 3AD. Les résistances ne participent pas au signal de sortie ΔV. Le reste du pont est alimenté au ¾ de la tension de référence Vs.

Bien entendu, d'autres types d'interrupteurs pourraient être envisagés pour commander le circuit auxiliaire ou les circuits auxiliaires décrits. Par exemple, l'interrupteur peut être un optocoupleur. L'utilisation d'un optocoupleur permet de découpler le circuit électrique de mesure du circuit de commande, et permet donc d'éviter des effets parasites lié au circuit de commande.

En outre, le montage 28 de type pont de Wheatstone comporte ici un deuxième circuit auxiliaire 44. Tel qu'illustré, le deuxième circuit auxiliaire est raccordé au pôle positif B de la cellule de charge postérieure droite 3PD, et, d'autre part, au pôle négatif A de la cellule de charge postérieure droite 3PD.

On notera que, de la même manière que le premier circuit auxiliaire 42, le deuxième circuit auxiliaire 44 est symétrique selon le premier axe de symétrie A1.

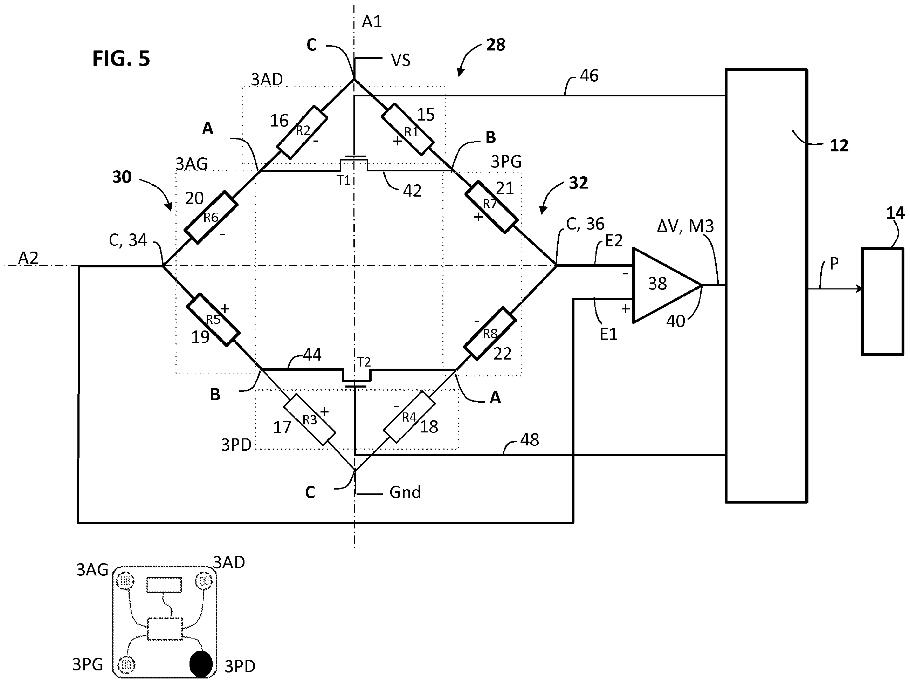

Le deuxième circuit auxiliaire 44 comporte également un transistor T2. Comme pour le premier transistor T1, lorsque le transistor T2 est ouvert, le signal de sortie ΔV n'est pas influencé par le deuxième circuit auxiliaire 44. Lorsque le transistor T2 est fermé, et comme illustré sur la figure 5, un court-circuit se forme entre les pôles positifs B et négatifs A de la cellule de charge postérieure droite 3AD, et les résistances 17 et 18 de la cellule de charge postérieure droite 3PD ne participent pas au signal de sortie ΔV. Le reste du pont est alimenté au ¾ de la tension de référence Vs.

Chacun des deux circuits auxiliaires 42, 44 permet de court-circuiter les deux résistances de cellules de charge appartenant à deux pieds voisins dans le pèse personne et d'annuler leur contribution au signal de sortie ΔV. En effet, sur la figure 3, les cellules de charge concernées sont les deux cellules de charge du côté droit du pèse personne 10. Les circuits auxiliaires peuvent ainsi permettre de remonter à des valeurs correspondant au poids, au décentrage selon la direction droite/gauche et au décentrage selon la direction avant/arrière de l'utilisateur sur le pèse personne.

Pour ce faire, l'unité de commande électronique 12 commande indépendamment l'activation ou la désactivation des transistors T1 et T2 par des lignes de commandes 46 et 48.

L'unité de commande électronique 12 peut alors réaliser une première mesure M1 du signal de sortie ΔV avec les deux transistors à l'état ouvert. Toutes les cellules de charge contribuent de manière sensiblement égale au signal de sortie ΔV. La mesure M1 est alors une mesure du poids influencée par les décentrages droite/gauche et avant/arrière de l'utilisateur sur le pèse personne.

En outre, tel qu'illustré sur la figure 4, l'unité de commande 12 peut réaliser une deuxième mesure M2 du signal de sortie ΔV avec le premier transistor T1 à l'état fermé. La cellule de charge antérieure droite 3AD ne participe plus au signal de sortie ΔV. Alors la mesure M2 est une mesure du poids particulièrement influencée par les cellules de charge gauches et postérieures.

Enfin, tel qu'illustré sur la figure 5, l'unité de commande 12 peut réaliser une troisième mesure M3 du signal de sortie ΔV avec le deuxième transistor T2 à l'état fermé. La cellule de charge postérieure droite 3PD ne participe plus au signal de sortie ΔV. Alors la mesure M3 est une mesure du poids particulièrement influencée par les cellules de charge gauches et antérieures.

Chacune des mesures M1, M2, M3 correspond à des combinaisons linéaires du poids et des déséquilibrages selon la direction droite/gauche et avant/arrière de l'utilisateur sur la balance. Dans l'unité de commande 12, le vecteur formé par les mesures M1, M2, M3 peut alors être multiplié par une matrice de passage A pour obtenir des valeurs correspondant au poids P, au décentrage avant/arrière A/P et au décentrage droite/gauche D/G.

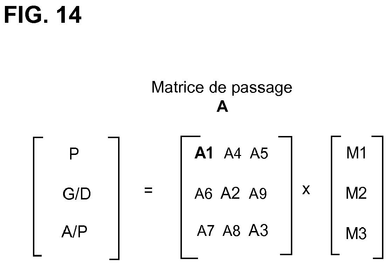

Comme visible sur la figure 14, la matrice A est formée par des coefficients A1-A9. Les coefficients peuvent être multipliés aux mesures M1, M2 et M3. La valeur de chacun des coefficients peut être déterminée par un calcul théorique. Néanmoins, les coefficients peuvent également être déterminés expérimentalement, pour améliorer la précision de la matrice de passage A. En pratique, la matrice A expérimentale peut être vue comme la somme de la matrice A théorique et d'une matrice perturbatrice.

Le poids P peut être transmis à l'afficheur 14. Le poids affiché est alors affranchi des perturbations par un décentrage de l'utilisateur sur le pèse personne.

En outre, un signal de ballistocardiographie (BCG), mesuré par le pèse personne, peut être nettoyé des composantes liées aux mouvements selon la direction droite/gauche et avant/arrière de l'utilisateur. Le signal BCG est donc amélioré.

Les valeurs de décentrage peuvent également permettre à l'utilisateur d'interagir avec le pèse personne 10, notamment par le biais de l'afficheur 14.

Les valeurs de décentrage peuvent en outre permettre d'étudier le déséquilibre de l'utilisateur sur le pèse personne.

### 4. Variantes de circuits auxiliaires

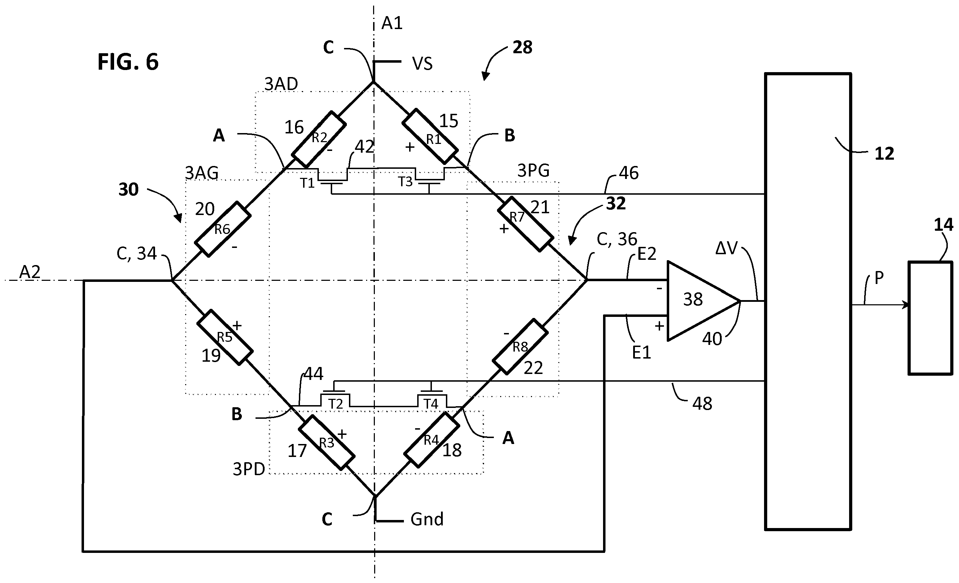

La figure 6 illustre également un montage 28 comportant deux circuits auxiliaires 42, 44. Ici, le premier circuit auxiliaire 42 comprend une paire de transistors T1, T3 commandés simultanément par la ligne de commande 46. De même, le deuxième circuit auxiliaire 44 comprend une paire de transistors T2, T4 commandés simultanément par la ligne de commande 48. Un transistor n'étant pas parfaitement symétrique, l'utilisation de deux transistors par circuit auxiliaire permet une meilleure symétrie du montage 28.

On note que l'un parmi le premier circuit auxiliaire 42 et le deuxième circuit auxiliaire 44 pourrait comporter deux transistors et l'autre parmi le premier circuit auxiliaire 42 et le deuxième circuit auxiliaire 44 pourrait comporter un transistor.

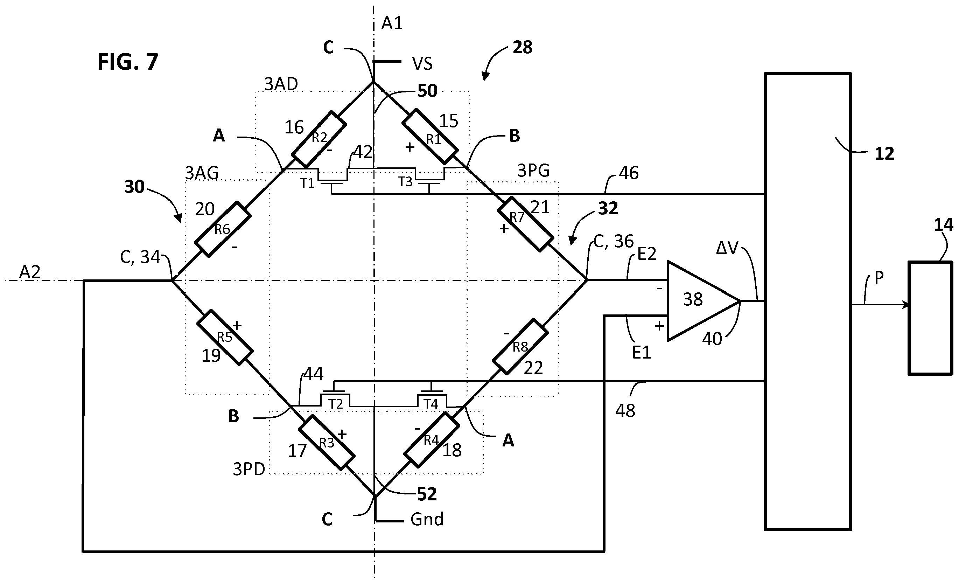

La figure 7 illustre deux circuits auxiliaires 42, 44 comportant chacun une paire de transistors T1, T3 et T2, T4. En outre, une branche additionnelle 50 relie le premier circuit auxiliaire 42, entre les deux transistors T1, T3, à la tension de référence Vs. Une autre branche additionnelle 52 relie le deuxième circuit auxiliaire 44 au potentiel de masse. Les branches additionnelles 50, 52 permettent d'alimenter l'ensemble du pont à la tension de référence Vs lorsque les transistors de l'un ou l'autre des circuits auxiliaires sont commandés à l'état fermé. Cette configuration permet alors d'augmenter la valeur du signal de sortie ΔV, notamment suffisamment pour améliorer le rapport signal sur bruit (SNR).

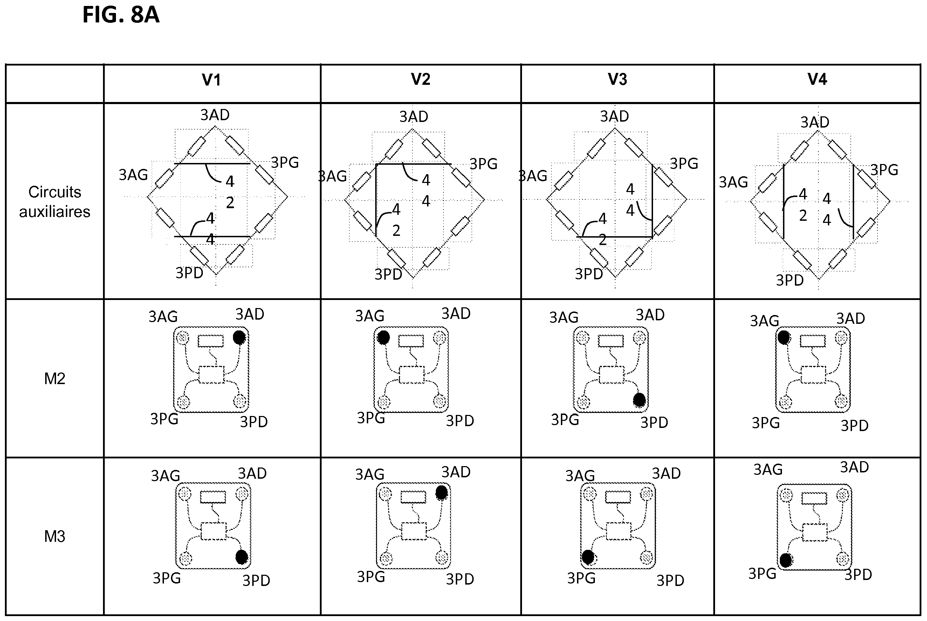

Le tableau de la figure 8A illustre des positionnements alternatifs des circuits auxiliaires 42, 44. Chaque variante peut comporter des circuits auxiliaires à un ou deux transistors, ou comporter une branche additionnelle.

La variante V1 correspond au montage décrit ci-avant. Avantageusement, l'agencement des premier et deuxième circuits auxiliaires 42,44 sur les cellules de charge liées à la tension de référence et au potentiel de masse permet de limiter les effets de la température.

Sur la variante V2, le premier circuit auxiliaire 42 permet de court-circuiter la cellule de charge antérieure gauche 3AG, pour la deuxième mesure M2, et le deuxième circuit auxiliaire permet de court-circuiter la cellule de charge antérieure droite 3AD, pour la troisième mesure M3.

La variante V3 comporte un premier circuit auxiliaire 42 permettant de court-circuiter la cellule de charge postérieure droite 3PD, pour la deuxième mesure M2, et un deuxième circuit auxiliaire 44 permettant de court-circuiter la cellule de charge postérieure gauche 3PG, pour la troisième mesure M3.

La variante V4 comporte un premier circuit auxiliaire 42 permettant de court-circuiter de la cellule de charge antérieure gauche 3AG, pour la deuxième mesure M2, et un deuxième circuit auxiliaire 44 permettant de court-circuiter la cellule de charge postérieure gauche 3PG, pour la troisième mesure M3.

On remarquera que dans chacune des variantes V1, V2, V3, V4 :
- chaque circuit auxiliaire est symétrique selon l'axe A1 ou A2, pour éviter une saturation de l'amplificateur ;
- les premiers circuits auxiliaires et deuxièmes circuits auxiliaires sont agencés sur les résistances de cellules de charge appartenant à deux pieds voisins dans le pèse personne.
En respectant ces conditions, il apparait possible d'effectuer trois mesures du signal de sortie ΔV pour remonter au poids P d'un utilisateur, un décentrage avant/arrière A/P et un décentrage droite/gauche D/G.

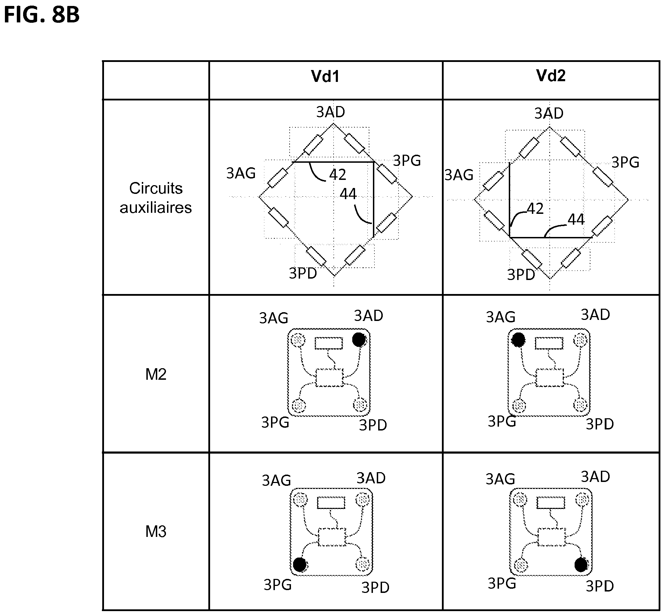

Dans deux autres variantes illustrées sur le tableau de la figure 8B, les premiers circuits auxiliaires 42 et deuxième circuits auxiliaires 44 sont agencés sur les résistances de cellules de charge appartenant à deux pieds qui ne sont pas voisins, c'est-à-dire deux pieds en diagonales. Il existe alors deux variantes Vd1, Vd2 possibles : les cellules de charge antérieure gauche 3AG et postérieure droite 3DP sont court-circuitées et les cellules de charge antérieure droite 3AD et postérieure gauche 3PG sont court-circuitées.

Sur la variante Vd1, le premier circuit auxiliaire 42 permet de court-circuiter la cellule de charge antérieure droit 3AD, pour la deuxième mesure M2, et le deuxième circuit auxiliaire 44 permet de court-circuiter la cellule de charge postérieure gauche 3PG, pour la troisième mesure M3.

Sur la variante Vd2, le premier circuit auxiliaire 42 permet de court-circuiter la cellule de charge antérieure gauche 3AG, pour la deuxième mesure M2, et le deuxième circuit auxiliaire 44 permet de court-circuiter la cellule de charge postérieure droite 3PD, pour la troisième mesure M3.

On remarquera que dans chacune des variantes Vd1, Vd2, chaque circuit auxiliaire 42, 44 est symétrique selon l'axe A1 ou A2, pour éviter une saturation de l'amplificateur. En respectant ces conditions, il apparait possible d'effectuer trois mesures du signal de sortie ΔV pour obtenir le poids et des informations sur une torsion de la plaque. Plus d'information à propos de la torsion seront données par la suite.

### 5. Circuit auxiliaire déporté

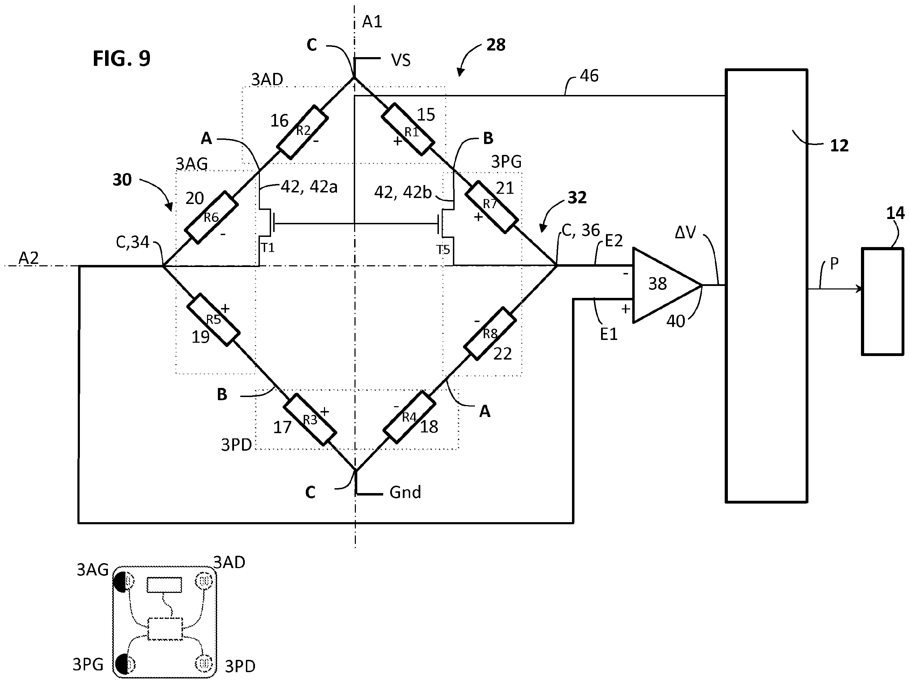

La figure 9 illustre un circuit auxiliaire 42 comportant deux parties 42a, 42b. Tel qu'illustré, la première partie 42a est raccordée au pôle négatif A de la cellule de charge antérieure gauche 3AG et au pôle C de la cellule de charge antérieure gauche 3AG. La deuxième partie 42b est raccordée au pôle positif B de la cellule de charge postérieure gauche 3PG et au pôle C de la cellule de charge postérieure gauche 3PG, d'autre part.

On notera que le circuit auxiliaire 42 en deux parties est symétrique selon l'axe A1. En outre, on notera que la première partie 42a et la deuxième partie 42b du circuit auxiliaire 42 court-circuitent deux résistances appartenant à des cellules de charge de deux pieds voisins dans le pèse personne, en l'occurrence les pieds antérieur gauche et postérieur gauche.

Chaque partie 42a, 42b du circuit auxiliaire 42 comporte un transistor T1, T5. Les deux transistors sont commandés simultanément à l'état fermé par l'unité de commande 12 par la ligne de commande 44.

Dans cet état fermé, la résistance 20 de la cellule de charge antérieure gauche 3AG et la résistance 21 de la cellule de charge postérieure gauche 3PG sont chacune court-circuitées à leurs bornes. Alors, l'influence des deux cellules de charge du côté gauche du pèse personne sur le signal de sortie ΔV, lors de la deuxième mesure M2, est divisée par deux. Une telle mesure M2 permet alors de remonter à un décentrage selon la direction droite/gauche.

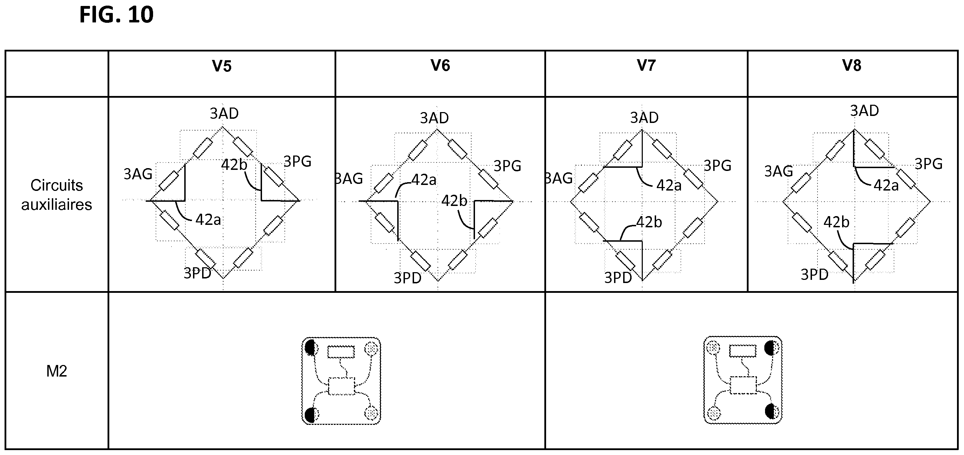

Le tableau de la figure 10 illustre des variantes de circuits auxiliaires 42 en deux parties permettant d'effectuer la deuxième mesure M2.

La variante V5 correspond à l'exemple de la figure 9.

La variante V6 permet de court-circuiter la résistance 19 de la cellule de charge antérieure gauche 3AG et de court-circuiter la résistance 22 de la cellule de charge postérieure gauche 3PG.

La variante V7 permet de court-circuiter de la résistance R2 de la cellule de charge antérieure droite 3AD et la résistance R3 de la cellule de charge postérieure droite 3PD.

Enfin, la variante V8 permet de court-circuiter la résistance 15 de la cellule de charge antérieure droite 3AD et la résistance 18 de la cellule de charge postérieure droite 3PD.

On remarquera que chacune des variantes V5 à V8 de circuit auxiliaire 42 en deux parties est symétrique selon l'axe A1 ou l'axe A2. Par ailleurs chaque partie de circuit-auxiliaire est agencée pour court-circuiter deux résistances appartenant à deux pieds voisins dans le pèse personne 10.

On remarquera également que les variantes V5 à V8 permettent toutes d'effectuer une mesure M2 particulièrement sensible à un décentrage selon la direction droite/gauche.

En effet, l'agencement du circuit auxiliaire en deux parties est limité par la condition de symétrie selon le premier ou deuxième axe de symétrie A1, A2. Afin d'agencer un circuit auxiliaire en deux parties sur une résistance avant et une résistance arrière, il est nécessaire de permuter l'agencement des cellules de charge dans le montage 28.

### 6. Deuxième circuit auxiliaire d'un circuit déporté

Afin d'effectuer une troisième mesure M3 sur un circuit auxiliaire en deux parties, il est possible d'ajouter un deuxième circuit auxiliaire 44 sur l'une quelconque des variantes V5 à V8. Alors, il apparait possible d'estimer le poids P d'un utilisateur, un décentrage avant/arrière et un décentrage droite/gauche.

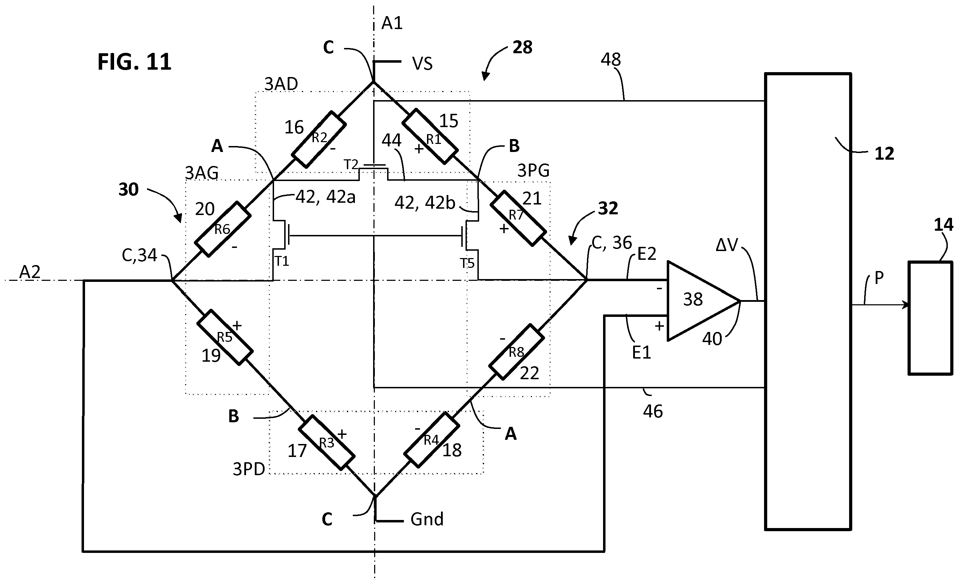

Comme visible sur la figure 11, le premier circuit auxiliaire 42 est analogue à la variante V5 décrite ci-avant. Le deuxième circuit auxiliaire 44 est raccordé d'une part au pôle négatif A la cellule de charge antérieure droite 3AD et, d'autre part, au pôle positif B de la cellule de charge antérieure droite 3AD. Le deuxième circuit auxiliaire 44 est analogue au premier circuit auxiliaire de la variante V1 décrit ci-avant.

On remarquera que le deuxième circuit auxiliaire est symétrique selon l'axe A1. En outre, la cellule de charge antérieur droite 3AD, court-circuitée par le deuxième circuit auxiliaire 44, est voisine dans le pèse personnes des cellules de charge antérieur gauche 3AG et postérieur gauche 3PG, court-circuitées (partiellement) par le premier circuit auxiliaire 42 en deux parties.

En variante, le deuxième circuit auxiliaire 44 peut être l'une quelconque des circuits auxiliaires des variantes V1 à V4. On remarquera que dans chacune des combinaisons possibles, au moins une résistance court-circuitée par le premier circuit auxiliaire 42 appartient à une cellule de charge voisine à une résistance court-circuitée par le deuxième circuit auxiliaire 44.

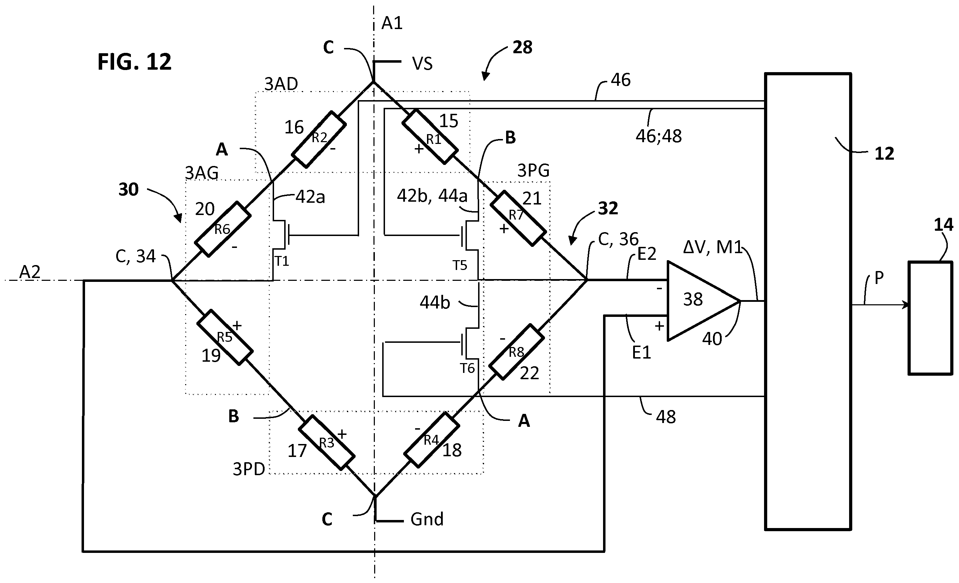

Par ailleurs, tel qu'illustré dans l'exemple de la figure 12, le deuxième circuit auxiliaire 44 peut être en deux parties, dont une partie est commune avec le premier circuit auxiliaire 42.

Ici, le premier circuit auxiliaire 42 est analogue à la variante V5 décrite ci-avant. Le deuxième circuit auxiliaire comporte une première partie 44a commune à la deuxième partie 42b du premier circuit auxiliaire 42. La deuxième partie 44b du deuxième circuit auxiliaire est raccordée au pôle négatif A de la cellule de charge postérieure droite 3PD et au pôle C de la cellule de charge postérieure gauche 3PG, pour court-circuiter la résistance 22.

On remarquera alors que le deuxième circuit auxiliaire 44 est symétrique selon l'axe A2. On remarquera également que la résistance 20, court-circuitée par le premier circuit auxiliaire, appartient au pied antérieur gauche, voisin au pied postérieur gauche exploité par le deuxième circuit auxiliaire 44.

Chaque partie de circuit auxiliaire est commandée indépendamment par un transistor T1, T5, T6. La deuxième mesure M2 est effectuée lorsque l'unité de commande 12 ferme simultanément les transistors T1 et T5 des premier et deuxième circuits auxiliaires 42, 44. Alors, la mesure M2 est analogue au circuit en deux parties de la variante V5 décrite ci-avant. La troisième mesure M3 est effectuée en commandant simultanément les transistors T5 et T6 des deuxième et troisième circuits auxiliaire 44, 54. La mesure M3 est alors analogue à la troisième mesure M3 de la variante V4.

Il apparait possible d'imaginer d'autres agencements de deuxième circuit auxiliaire 44, non illustrés. Afin de remonter au poids et aux décentrages droite/gauche et avant/arrière, on respectera néanmoins la condition qu'au moins une résistance court-circuitée par le premier circuit auxiliaire et au moins une résistance court-circuitée par le deuxième circuit auxiliaire appartiennent à deux pieds voisins dans le pèse personne.

### 7. Circuit auxiliaire supplémentaire

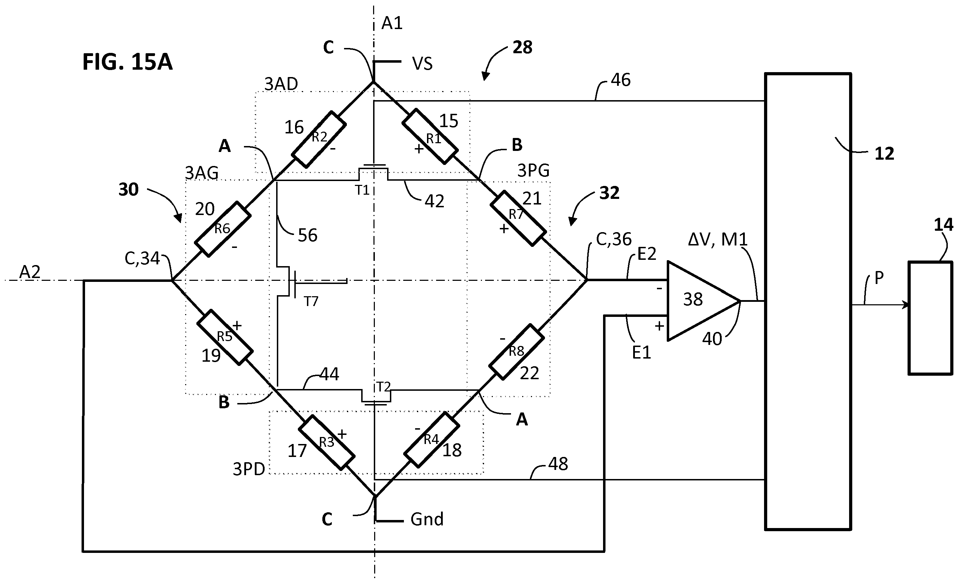

Comme visible sur la figure 15A, le montage 28 de type pont de Wheatstone peut également comporter un troisième circuit auxiliaire 56. Dans l'exemple illustré, le troisième circuit auxiliaire 56 (avec un transistor T7) est raccordé entre le pôle négatif A et le pôle positif B de la cellule de charge antérieure gauche 3AG.

On notera que le troisième circuit auxiliaire 56 est ici symétrique par rapport à l'axe de symétrie A2. Le montage 28 reste équilibré. En effet, les circuits auxiliaires 42, 44, 56 présentent chacun une symétrie selon l'axe A1 ou l'axe A2.

De manière similaire aux premier et deuxième circuits auxiliaires 42, 44, le troisième circuit auxiliaire 56 peut comporter un ou deux transistors avec ou sans branche additionnelle. Alors, lorsque le ou les transistors sont ouverts, le signal de sortie ΔV n'est pas influencé par le troisième circuit auxiliaire 56. A l'inverse, lorsque le ou les transistors sont fermés, un court-circuit se forme entre les pôles positif et négatif de la cellule de charge antérieure gauche 3AG. Alors, le montage 28 comporte un court-circuit qui annule la contribution des résistances 19 et 20 de la cellule de charge antérieure gauche 3AG.

Les premier, deuxième et troisième circuits auxiliaires 42, 44, 56 permettent de court-circuiter trois parmi les quatre cellules de charge du pèse personne 10. Dans l'exemple de la figure 15A, les trois cellules de charges concernées sont les cellules de charge antérieures droite et gauche 3AD, 3AG et la cellule de charge postérieure droite 3PD. Les trois circuits auxiliaires 42, 44, 56 permettent d'introduire une quatrième dimension de mesure. La quatrième dimension peut permettre de remonter au poids, au décentrage avant/arrière, au décentrage droite/gauche et à une valeur de torsion de la plaque 58 sur laquelle sont montées les cellules de charge.

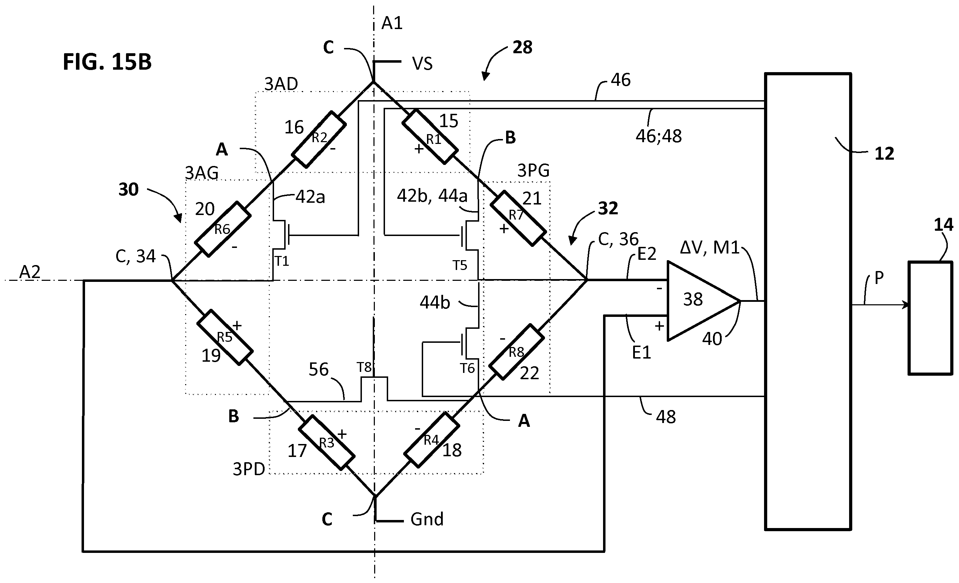

La figure 15B illustre une alternative au mode de réalisation de la figure 15A, dans laquelle un des circuits auxiliaires est déporté (c'est-à-dire en deux parties qui court-circuitent chacune une résistance d'une cellule de charge différente), comme décrit en relation avec la figure 9. Le circuit de la figure 15a correspond à celui de la figure 12, avec un ajout d'un troisième auxiliaire 56 qui est identique au circuit auxiliaire 44 des figures 2 à 5. D'autres variantes combinant trois circuits auxiliaires dont au moins est déporté sont possibles, pourvu que les conditions de symétrie soient respectées et que chacune des mesures M1, M2, M3, M4 contiennent une information non présente dans les autres mesures.

La figure 16 illustre plus précisément ce qu'on entend par torsion de la plaque 58. Tel qu'illustrées, deux cellules de charge disposées en diagonale sur la plaque 58 mesurent des charges de direction opposées par rapport aux deux autres cellules de charge. Dès lors, la plaque 58 est soumise à une torsion par l'action d'un couple de forces opposées. La torsion a pour effet de créer une déformation de type point-selle pour la plaque 58. Une telle torsion peut polluer les valeurs de poids et de décentrages, notamment lorsque la plaque 58 n'est pas suffisamment rigide. Dès lors, déterminer la torsion de la plaque 58 peut permettre d'améliorer la précision du poids et des décentrages tout en ayant la possibilité d'utiliser une plaque 58 relativement souple dans le pèse personne 10.

Pour déterminer la torsion de la plaque 58, l'unité de commande électronique 12 peut réaliser une quatrième mesure M4 du signal de sortie ΔV avec le ou les transistors du troisième circuit auxiliaire 56 à l'état fermé. Ici, la cellule de charge antérieure gauche 3AG ne participe plus au signal de sortie ΔV. Alors, la quatrième mesure M4 est une mesure de poids particulièrement influencée par les cellules de charge droites et postérieures.

Chacune des mesures M1 à M4 correspondent à des combinaisons linéaires et indépendantes du poids et des déséquilibrages. Dans l'unité de commande 12, le vecteur formé par les mesures M1 à M4 peut être multiplié par une matrice de passage A'. La matrice A' comporte ici une dimension supplémentaire par rapport à la matrice A. Ici, la matrice A' est formée par les coefficients A1 à A16. Les coefficients peuvent être multipliés aux mesures M1, M2, M3 et M4. Ainsi, la quatrième mesure M4 permet de déterminer, outre les valeurs de poids et de décentrage, la torsion la plaque 58.

On note que la torsion peut être affichée à l'utilisateur. L'utilisateur peut par exemple être invité à corriger sa position pour réduire la torsion de la plaque 58. L'affichage de la torsion peut être par fait l'affichage des indicateurs 26, par exemple en affichant deux flèches opposées (sur une même diagonale). L'utilisateur sait alors qu'il doit déplacer un pied vers l'avant ou l'arrière et/ou l'autre pied vers l'arrière ou l'avant, respectivement, pour mieux répartir les charges.

### 8. Alternatives à 3 courts circuits

Il apparait possible de définir des positionnements alternatifs du troisième circuit auxiliaire 56. Chaque variante peut également comporter des circuits alternatifs à un ou deux transistors, avec ou sans branche additionnelle.

On respectera toutefois les conditions suivantes :
- chacun des trois circuits auxiliaires 42, 44, 56 est symétrique soit selon l'axe A1 soit selon l'axe A2, pour éviter une saturation de l'amplificateur ;
- les trois circuits auxiliaires 42, 44, 56 sont agencés de sorte à ce que trois cellules de charge sur les quatre sont concernées par un circuit auxiliaire.

### 9. Communication

L'unité de commande électronique 12 peut être pourvue d'un module de communication 100. Le module de communication permet l'émission et/ou la réception de données sans fil.

De préférence, le module de communication exploite un réseau local de type Bluetooth, Bluetooth Low-Energy (BLE) ou Wi-fi. Alors, le module de communication peut échanger des données avec un smartphone à proximité du pèse personne sans nécessiter une énergie importante. Le smartphone peut en outre servir de passerelle pour échanger les données avec un serveur distant. L'utilisateur peut alors accéder aux données depuis le smartphone ou depuis un ordinateur connecté au serveur.

En variante, le module de communication exploite un réseau de télécommunication cellulaire. Le réseau de communication cellulaire peut par exemple être GSM, 3G, 4G, 5G, 4G-LTE. Cependant, le module de communication peut également exploiter une passerelle connectée au réseau cellulaire. La passerelle peut notamment être un routeur, par exemple un routeur Wi-fi connecté au réseau cellulaire. Alors, le module de communication peut directement échanger les données avec le serveur. L'utilisateur peut accéder aux données depuis le serveur, notamment sur son smartphone ou l'ordinateur.

Les données reçues par le module de communication peuvent comprendre des informations concernant l'utilisateur, par exemple son nom, son sexe et un historique de son poids, des idées de questions à poser au travers l'afficheur et/ou la météo de la journée.

Par ailleurs, le module de communication peut envoyer le poids, le déséquilibrage, le signal BCG et/ou les réponses aux questions posées vers le smartphone et le serveur. L'utilisateur peut alors accéder aux données à tout moment.

### 10. Procédé de mesure

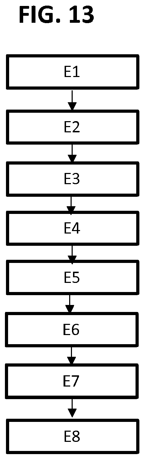

La figure 13 illustre un procédé, mis en oeuvre par l'unité de commande électronique 12, pour remonter au poids d'un utilisateur et à son décentrage sur le pèse personne.

La première étape E1 consiste à effectuer la première mesure M1 du signal de sortie ΔV lorsque les quatre cellules de charge sont à contribution sensiblement égales dans le pont de Wheatstone. Alors, les transistors sont commandés à l'état ouvert. La mesure M1 est une mesure du poids influencé par les décentrages droite/gauche et avant/arrière de l'utilisateur sur le pèse personne.

La seconde étape E2 consiste à commander le premier circuit auxiliaire 42 à l'état fermé pour court-circuiter deux résistances appartenant à un même pied ou deux pieds voisins dans le pèse personne.

La troisième étape E3 consiste à effectuer la deuxième mesure M2 du signal de sortie ΔV avec le court-circuit formé à l'étape E2. La mesure M2 est alors une combinaison linéaire du poids avec une contribution plus importante d'un décentrage avant/arrière ou droite/gauche.

Il est à noter que dans le cas où le montage 28 ne comporte qu'un seul circuit auxiliaire, la mesure M1 peut être transmise à l'afficheur 14 et la mesure M2 peut servir à interagir avec le pèse personne et/ou étudier l'équilibre de l'utilisateur et/ou nettoyer le signale BCG selon la direction droite/gauche ou la direction avant/arrière.

Le cas échéant, l'étape E4 consiste commander le premier circuit auxiliaire 42 à l'état ouvert, et de commander le deuxième circuit auxiliaire 44 à l'état fermé. Deux résistances appartenant à un même pied ou à deux pieds voisins dans le pèse personne sont court-circuitées à leur tour. Par ailleurs, une résistance court-circuitée par le premier circuit auxiliaire et au moins une résistance court-circuitée par le deuxième circuit auxiliaire appartiennent à deux pieds voisins dans le pèse personne.

La cinquième étape E5 consiste à effectuer une troisième mesure M3 du signal de sortie avec le deuxième circuit auxiliaire 44 à l'état fermé. La mesure M3 est également une mesure du poids avec une contribution plus importante d'un décentrage avant/arrière ou droite/gauche. Néanmoins, les contributions des décentrages diffèrent de ceux de la deuxième mesure M2.

A l'étape E6, le vecteur M formé par les mesures M1, M2 et M3 peut être multiplié par la matrice de passage A pour obtenir une valeur de poids P affranchit de l'influence d'un décentrage, une valeur de décentrage selon la direction avant/arrière et une valeur de décentrage selon la direction droite/gauche.

Ainsi, à l'étape E7, les valeurs obtenues sont exploitées. Le poids P, affranchit du décentrage peut être affiché à l'utilisateur. Les valeurs de décentrages peuvent être exploitées pour nettoyer un signal BCG. Les valeurs de décentrages peuvent être exploitées pour interagir avec le pèse personne. Les valeurs de décentrages peuvent également être exploitées pour étudier l'équilibre de l'utilisateur.

L'étape E8 consiste à envoyer le poids, le décentrage et/ou le signal BCG vers le smartphone et le serveur. L'utilisateur peut alors accéder aux informations mesurées sans être sur le pèse personne, notamment depuis son smartphone ou un ordinateur.

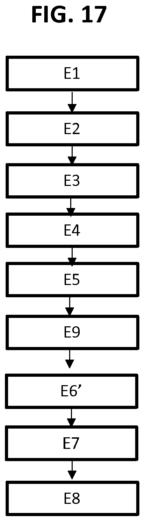

La figure 17 illustre un autre procédé 200 comportant une étape supplémentaire. Les étapes E1 à E5 sont identiques à celles décrites ci-avant pour le procédé 100

L'étape E9 consiste à effectuer une quatrième mesure M4 du signal de sortie ΔV avec le troisième circuit auxiliaire 56 à l'état fermé. La mesure M4 est alors une mesure du poids avec une contribution d'un décentrage avant/arrière ou droite/gauche différent que celui des premières et deuxièmes mesures.

Dès lors, à l'étape E6, le vecteur M formé par les mesures M1, M2, M3 et M4 définit un espace à quatre dimensions. Le vecteur M peut être multiplié par la matrice de passage A'. On obtient ainsi, outre le poids P et les valeurs de décentrage selon les directions avant/arrière et droite/gauche, une valeur correspondant à la torsion de la plaque 58. Etablir la torsion de la plaque permet d'améliorer la précision du poids et des valeurs de décentrages, qui peuvent être calculés en tenant compte de la torsion.

Les étapes E7 à E8 sont ensuite identiques à celles décrites ci-avant pour le procédé 100.

L'ordre dans lequel les mesures M1, M2, M3, M4, etc. sont effectuées n'importe pas. Dans un mode de réalisation, la fréquence d'obtention des mesures F est comprise entre quelques Hz et quelques centaines de Hz, ce qui signifie qu'une mesure est prise toutes les 1/F secondes. L'obtention de toutes les mesures prend donc en général moins de 0,5 seconde, voire moins de 0,1 seconde ou moins de 0,01 seconde, qui sont des intervalles de temps court, durant lequel l'utilisateur est resté immobile (il n'y aura pas de déplacement de la répartition des masses pendant les mesures).

L'invention ne se limite pas aux seuls exemples décrits ci-avant mais est susceptible de nombreuses variantes accessibles à l'homme de l'art.

Par exemple, il est possible d'imaginer des agencements de circuits auxiliaires alternatifs permettant de remonter à un poids, un décentrage avant arrière et/ou un décentrage droite/gauche.

En outre, il est possible de réaliser une cinquième mesure M5 avec deux circuits auxiliaires 42, 44 à l'état fermé. Cette mesure est notamment possible dans le cas de circuits auxiliaires agencés sur deux cellules de charges voisines, ou dans le cas d'un circuit auxiliaire en deux parties combinées avec un circuit auxiliaire sur une cellule de charge distincte de celles en partie court-circuitées par le circuit auxiliaire en deux parties. La cinquième mesure M5 peut alors être ajoutée au vecteur M pour remonter aux valeurs de poids et de décentrages. Alternativement, la cinquième mesure M5 peut être en remplacement d'une autre mesure, tant qu'aucune information n'est perdue parmi les différentes mesures M1, M2, M3, M4 ou M5.

En outre, l'une des mesures peut être prise avec deux circuits auxiliaires à l'état fermé en même temps. Dans ce cas, le court-circuit formé par les deux circuits auxiliaires combiné est symétrique selon l'axe A1 ou A2. Le pont de Wheatstone reste ainsi équilibré.

Grâce à la connaissance des déséquilibres avant/arrière, gauche/droite et même grâce à la torsion, le dispositif de pesage peut être utilisé comme un contrôleur pour un système électronique (soit le dispositif de pesage lui-même, comme décrit plus haut lorsqu'une sélection est à faire, soit un ordinateur ou une console de jeu).

## Revendications

1. Dispositif de pesage de type pèse-personne électronique (1) comprenant quatre pieds, respectivement antérieur gauche, antérieur droit, postérieur gauche et postérieur droit, le pied antérieur gauche comprenant une cellule de charge antérieure gauche (3AG), le pied antérieur droit comprenant une cellule de charge antérieure droite (3AD), le pied postérieur gauche comprenant une cellule de charge postérieure gauche (3PG) et le pied postérieur droit comprenant une cellule de charge postérieure droite (3PD),
chaque cellule de charge comportant au moins deux résistances (15,16 ; 17,18 ; 19,20 ; 21,22),
les cellules de charge étant combinées dans un montage (28) de type pont de Wheatstone comportant :
- une première branche (30), et une deuxième branche (32), les première et deuxième branches étant montées en parallèle entre une tension de référence (Vs) et un potentiel de masse (Gnd), les première et deuxième branches étant disposées de part et d'autre d'un premier axe de symétrie (A1) traversant la tension de référence et le potentiel de masse;
- un premier point intermédiaire (34), sur la première branche, et un second point intermédiaire (36), sur la deuxième branche, la première et seconde branche comportant un même nombre de résistances de part et d'autre du premier et du deuxième point intermédiaire, respectivement, pour définir un deuxième axe de symétrie (A2) traversant les premier et second points intermédiaires; et **caractérisé par**
- un premier circuit auxiliaire (42), configuré pour sélectivement court-circuiter deux résistances appartenant à un même premier pied ou à deux premiers pieds voisins dans le pèse personne, le premier circuit auxiliaire étant symétrique selon le premier axe (A1) ou le deuxième axe (A2),
le montage (28) étant commandé par une unité de commande électronique (12) pour estimer un poids et pour estimer un décentrage d'un utilisateur sur le pèse personne.

2. Dispositif de pesage selon la revendication 1, dans lequel le montage (28) comporte un deuxième circuit auxiliaire (44), le deuxième circuit auxiliaire étant configuré pour court-circuiter deux résistances appartenant à un même deuxième pied ou à deux deuxièmes pieds voisins dans le pèse personne, le deuxième circuit auxiliaire étant symétrique selon le premier axe (A1) ou le deuxième axe (A2).

3. Dispositif de pesage selon la revendication 1, dans lequel le montage (28) comporte un deuxième circuit auxiliaire (44), le deuxième circuit auxiliaire étant configuré pour court-circuiter deux résistances appartenant à un même deuxième pied ou à deux deuxièmes pieds voisins dans le pèse personne, le deuxième circuit auxiliaire étant symétrique selon le premier axe (A1) ou le deuxième axe (A2), et au moins une résistance court-circuitée par le premier circuit auxiliaire et au moins une résistance court-circuitée par le deuxième circuit auxiliaire appartenant à deux pieds voisins.

4. Dispositif de pesage selon la revendication 2 ou 3, dans lequel le montage (28) comporte un troisième circuit auxiliaire (56), le troisième circuit auxiliaire (56) étant symétrique selon le premier axe (A1) ou le deuxième axe (A2), les premier, deuxième et troisième circuits auxiliaires (42, 44, 56) étant configurés pour concerner trois parmi les quatre cellules de charge.

5. Dispositif de pesage selon la revendication 4, dans lequel les premier, deuxième et troisième circuits auxiliaires (42, 44, 56) sont configurés pour court-circuiter trois parmi les quatre cellules de charge.

6. Dispositif de pesage selon l'une quelconque des revendications précédentes, dans lequel le ou chaque circuit auxiliaire (42, 44) comporte au moins un interrupteur, par exemple un transistor (T1, T2), commandé par l'unité de commande électronique.

7. Dispositif de pesage selon l'une quelconque des revendications précédentes, dans lequel le ou chaque circuit auxiliaire (42, 44) comporte deux interrupteurs, par exemple deux transistors (T1, T2 ; T3, T4), commandés par l'unité de commande électronique.

8. Dispositif de pesage selon l'une quelconque des revendications précédentes, dans lequel le ou chaque circuit auxiliaire (42, 44) est relié à au moins l'un parmi : la tension de référence (Vs), le potentiel de masse (GND), le premier point intermédiaire (34) ou le deuxième point intermédiaire (36).

9. Dispositif de pesage selon l'une quelconque des revendications précédentes, dans lequel les points intermédiaires (34,36) sont raccordés à un unique amplificateur (38) pour obtenir un signal de sortie (ΔV) du montage (28).

10. Procédé mis en oeuvre dans un dispositif de pesage selon l'une quelconque des revendications 1 à 9, comprenant :
- Effectuer une première mesure (M1) de signal de sortie du montage ;
- Commander le premier circuit auxiliaire à l'état fermé ;
- Effectuer une deuxième mesure (M2) de signal de sortie du montage ;
- Etablir un poids et un décentrage d'un utilisateur à partir des première et deuxième mesures (M1, M2).

11. Procédé selon la revendication 10, en combinaison avec la revendication 2 ou 3, comportant, avant ou après la deuxième mesure :
- Commander le deuxième circuit auxiliaire à l'état fermé ;
- Effectuer une troisième mesure (M3) de signal de sortie du montage ;
- Etablir un poids (P), un décentrage avant-arrière et un décentrage droite-gauche d'un utilisateur à partir des première, deuxième et troisième mesures (M1, M2, M3).

12. Procédé selon la revendication 10, en combinaison avec la revendication 2, comportant, avant ou après l'une quelconque de la première ou de la deuxième mesure :
- Commander le deuxième circuit auxiliaire à l'état fermé ;
- Effectuer une troisième mesure (M3) de signal de sortie du montage ;
- Etablir au moins un poids (P) d'un utilisateur et la flexion d'une plaque du dispositif de pesage à partir des première, deuxième et troisième mesures (M1, M2, M3).

13. Procédé selon la revendication 11, en combinaison avec la revendication 4, comportant, avant ou après l'une quelconque de la première, deuxième ou troisième mesure:
- Commander le troisième circuit auxiliaire (56) à l'état fermé ;
- Effectuer une quatrième mesure (M4) de signal de sortie du montage ; et
- Etablir le poids, le décentrage avant arrière, le décentrage droite-gauche d'un utilisateur et la flexion d'une plaque du dispositif de pesage à partir des première, deuxième, troisième et quatrième mesures (M1, M2, M3, M4).

14. Procédé selon l'une quelconque des revendications 10 à 13, dans lequel le décentrage avant-arrière et/ou le décentrage droite-gauche permet au moins l'un parmi : une interaction du pèse personne avec un utilisateur, un nettoyage de signal de ballistocardiographie (BCG) et/ou une étude de l'équilibre de l'utilisateur sur le pèse-personne.

15. Procédé selon l'une quelconque des revendications 10 à 14, comprenant en outre une étape de contrôle d'un système électronique à l'aide de l'information de décentrage obtenue.

## Patentansprüche

1. Wägevorrichtung des Typs elektronische Badezimmerwaage (1) mit vier Füßen, nämlich einem linken vorderen, einem rechten vorderen, einem linken hinteren und einem rechten hinteren, wobei der linke vordere Fuß eine linke vordere Wägezelle (3AG), der rechte vordere Fuß eine rechte vordere Wägezelle (3AD), der linke hintere Fuß eine linke hintere Wägezelle (3PG) und der rechte hintere Fuß eine rechte hintere Wägezelle (3PD) umfasst,
jede Wägezelle umfasst mindestens zwei Widerstände (15, 16; 17, 18; 19, 20; 21, 22),
wobei die Wägezellen in einer Wheatstone-Brückenanordnung (28) kombiniert sind, die Folgendes umfasst:
- einen ersten Zweig (30) und einen zweiten Zweig (32), wobei der erste und der zweite Zweig parallel zwischen einer Bezugsspannung (Vs) und einem Massepotential (Gnd) angeordnet sind, wobei der erste und der zweite Zweig auf beiden Seiten einer ersten Symmetrieachse (A1) angeordnet sind, die durch die Bezugsspannung und das Massepotential verläuft;
- einen ersten Zwischenpunkt (34) auf dem ersten Zweig und einen zweiten Zwischenpunkt (36) auf dem zweiten Zweig, wobei der erste und der zweite Zweig die gleiche Anzahl von Widerständen auf beiden Seiten des ersten bzw. des zweiten Zwischenpunkts aufweisen, um eine zweite Symmetrieachse (A2) zu definieren, die durch den ersten und den zweiten Zwischenpunkt verläuft; und **gekennzeichnet durch**
- eine erste Hilfsschaltung (42), die so konfiguriert ist, dass sie selektiv zwei Widerstände kurzschließt, die zu demselben ersten Fuß oder zu zwei benachbarten ersten Füßen in der Badezimmerwaage gehören, wobei die erste Hilfsschaltung symmetrisch in Bezug auf die erste Achse (A1) oder die zweite Achse (A2) ist,
die Baugruppe (28) wird von einer elektronischen Steuereinheit (12) gesteuert, um ein Gewicht zu schätzen und einen Versatz eines Benutzers auf der Personenwaage zu schätzen.

2. Wägevorrichtung nach Anspruch 1, wobei die Baugruppe (28) eine zweite Hilfsschaltung (44) umfasst, die so konfiguriert ist, dass sie zwei Widerstände kurzschließt, die zu demselben zweiten Fuß oder zu zwei benachbarten zweiten Füßen in der Badezimmerwaage gehören, wobei die zweite Hilfsschaltung in Bezug auf die erste Achse (A1) oder die zweite Achse (A2) symmetrisch ist.

3. Wägevorrichtung nach Anspruch 1, wobei die Baugruppe (28) eine zweite Hilfsschaltung (44) umfasst, wobei die zweite Hilfsschaltung so konfiguriert ist, dass sie zwei Widerstände kurzschließt, die zu demselben zweiten Fuß oder zu zwei benachbarten zweiten Füßen in der Badezimmerwaage gehören, wobei die zweite Hilfsschaltung in Bezug auf die erste Achse (A1) oder die zweite Achse (A2) symmetrisch ist, und wobei mindestens ein Widerstand, der von der ersten Hilfsschaltung kurzgeschlossen wird, und mindestens ein Widerstand, der von der zweiten Hilfsschaltung kurzgeschlossen wird, zu zwei benachbarten Füßen gehören.

4. Wägevorrichtung nach Anspruch 2 oder 3, wobei die Baugruppe (28) eine dritte Hilfsschaltung (56) umfasst, wobei die dritte Hilfsschaltung (56) in Bezug auf die erste Achse (A1) oder die zweite Achse (A2) symmetrisch ist und die erste, zweite und dritte Hilfsschaltung (42, 44, 56) so konfiguriert sind, dass sie drei der vier Wägezellen betreffen.

5. Wägevorrichtung nach Anspruch 4, wobei die erste, zweite und dritte Hilfsschaltung (42, 44, 56) so konfiguriert sind, dass sie drei der vier Wägezellen kurzschließen.

6. Wägevorrichtung nach einem der vorhergehenden Ansprüche, wobei die oder jede Hilfsschaltung (42, 44) mindestens einen von der elektronischen Steuereinheit gesteuerten Schalter, z.B. einen Transistor (T1, T2), aufweist.

7. Wägevorrichtung nach einem der vorhergehenden Ansprüche, wobei die oder jede Hilfsschaltung (42, 44) zwei Schalter, z.B. zwei Transistoren (T1, T2; T3, T4), umfasst, die von der elektronischen Steuereinheit gesteuert werden.

8. Wägevorrichtung nach einem der vorhergehenden Ansprüche, wobei der oder jeder Hilfskreis (42, 44) mit mindestens einem der folgenden Punkte verbunden ist: der Referenzspannung (Vs), dem Massepotential (GND), dem ersten Zwischenpunkt (34) oder dem zweiten Zwischenpunkt (36).

9. Wägevorrichtung nach einem der vorhergehenden Ansprüche, wobei die Zwischenpunkte (34, 36) mit einem einzigen Verstärker (38) verbunden sind, um ein Ausgangssignal (ΔV) von der Baugruppe (28) zu erhalten.

10. Verfahren, das in einer Wiegevorrichtung nach einem der Ansprüche 1 bis 9 durchgeführt wird, umfassend:
- Durchführung einer ersten Messung (M1) des Ausgangssignals der Baugruppe;
- Steuerung des ersten Hilfsstromkreises in den geschlossenen Zustand;
- Durchführung einer zweiten Messung (M2) des Ausgangssignals der Baugruppe;
- Ermittlung des Gewichts und des Offsets eines Benutzers auf der Grundlage der ersten und zweiten Messung (M1, M2).

11. Verfahren nach Anspruch 10 in Kombination mit Anspruch 2 oder 3, bei dem vor oder nach der zweiten Messung
- den zweiten Hilfsstromkreis in den geschlossenen Zustand zu versetzen;
- Durchführung einer dritten Messung (M3) des Ausgangssignals der Baugruppe;
- Feststellen eines Gewichts (P), eines Versatzes zwischen vorne und hinten und eines Versatzes zwischen rechts und links eines Benutzers auf der Grundlage der ersten, zweiten und dritten Messung (M1, M2, M3).

12. Verfahren nach Anspruch 10 in Verbindung mit Anspruch 2, bei dem vor oder nach einer der ersten oder zweiten Messungen
- Steuerung des zweiten Hilfsstromkreises in den geschlossenen Zustand;
- Durchführung einer dritten Messung (M3) des Ausgangssignals der Baugruppe;
- Ermittlung mindestens eines Gewichts (P) eines Benutzers und der Biegung einer Platte der Wiegevorrichtung auf der Grundlage der ersten, zweiten und dritten Messung (M1, M2, M3).

13. Verfahren nach Anspruch 11 in Kombination mit Anspruch 4, umfassend vor oder nach einer der ersten, zweiten oder dritten Messungen:
- den dritten Hilfsstromkreis (56) in den geschlossenen Zustand zu steuern;
- Durchführen einer vierten Messung (M4) des Ausgangssignals von der Baugruppe; und
- Ermittlung des Gewichts, des Versatzes nach vorne und hinten, des Versatzes nach rechts und links eines Benutzers und der Biegung einer Platte der Wiegevorrichtung auf der Grundlage der ersten, zweiten, dritten und vierten Messung (M1, M2, M3, M4).

14. Verfahren nach einem der Ansprüche 10 bis 13, wobei der Front-Rück- und/oder Rechts-Links-Versatz mindestens eines der folgenden Verfahren ermöglicht: eine Interaktion der Personenwaage mit einem Benutzer, eine Reinigung des Ballistokardiographiesignals (BCG) und/oder eine Analyse des Gleichgewichts des Benutzers auf der Personenwaage.

15. Verfahren nach einem der Ansprüche 10 bis 14, das ferner einen Schritt zur Steuerung eines elektronischen Systems unter Verwendung der erhaltenen Offset-Informationen umfasst.

## Claims

1. Weighing device of the electronic bathroom scale type (1) comprising four feet, respectively left front, right front, left rear, and right rear, the left front foot comprising a left front load cell (3AG), the right front foot comprising a right front load cell (3AD), the left rear foot comprising a left rear load cell (3PG), and the right rear foot comprising a right rear load cell (3PD),
each load cell comprising at least two resistors (15,16; 17,18; 19,20; 21,22),
the load cells being combined in a Wheatstone bridge type of assembly (28) comprising:
- a first branch (30) and a second branch (32), the first and second branches being mounted in parallel between a reference voltage (Vs) and a ground potential (Gnd), the first and second branches being arranged on either side of a first axis of symmetry (A1) passing through the reference voltage and the ground potential;
- a first intermediate point (34), on the first branch, and a second intermediate point (36), on the second branch, the first and second branch comprising the same number of resistors on either side of the first and second intermediate point, respectively, in order to define a second axis of symmetry (A2) passing through the first and second intermediate points; and **characterized by**
- a first auxiliary circuit (42), configured to selectively short-circuit two resistors belonging to the same first foot or to two neighboring first feet in the bathroom scale, the first auxiliary circuit being symmetrical relative to the first axis (A1) or the second axis (A2),
the assembly (28) being controlled by an electronic control unit (12), to estimate a weight and to estimate an offset of a user on the bathroom scale.

2. Weighing device according to claim 1, wherein the assembly (28) comprises a second auxiliary circuit (44), the second auxiliary circuit being configured to short-circuit two resistors belonging to the same second foot or to two neighboring second feet in the bathroom scale, the second auxiliary circuit being symmetrical relative to the first axis (A1) or second axis (A2).

3. Weighing device according to claim 1, wherein the assembly (28) comprises a second auxiliary circuit (44), the second auxiliary circuit being configured to short-circuit two resistors belonging to the same second foot or to two neighboring second feet in the bathroom scale, the second auxiliary circuit being symmetrical relative to the first axis (A1) or second axis (A2), and at least one resistor short-circuited by the first auxiliary circuit and at least one resistor short-circuited by the second auxiliary circuit belong to two neighboring feet.

4. Weighing device according to claim 2 or 3, wherein the assembly (28) comprises a third auxiliary circuit (56), the third auxiliary circuit (56) being symmetrical relative to the first axis (A1) or second axis (A2), the first, second, and third auxiliary circuits (42, 44, 56) being configured to concern three among the four load cells.

5. Weighing device according to claim 4, wherein the first, second, and third auxiliary circuits (42, 44, 56) are configured to short-circuit three of the four load cells.

6. Weighing device according to any one of the preceding claims, wherein the or each auxiliary circuit (42, 44) comprises at least one switch, for example a transistor (T1, T2), controlled by the electronic control unit.

7. Weighing device according to any one of the preceding claims, wherein the or each auxiliary circuit (42, 44) comprises two switches, for example two transistors (T1, T2; T3, T4), controlled by the electronic control unit.

8. Weighing device according to any one of the preceding claims, wherein the or each auxiliary circuit (42, 44) is connected to at least one among: the reference voltage (Vs), the ground potential (GND), the first intermediate point (34), or the second intermediate point (36).

9. Weighing device according to any one of the preceding claims, wherein the intermediate points (34, 36) are connected to a single amplifier (38) in order to obtain an output signal (ΔV) from the assembly (28).

10. Method implemented in a weighing device according to any one of claims 1 to 9, comprising:
- performing a first measurement (M1) of the output signal from the assembly;
- controlling the first auxiliary circuit into the closed state;
- performing a second measurement (M2) of the output signal from the assembly;
- establishing a weight and offset of a user based on the first and second measurements (M1, M2).

11. Method according to claim 10, in combination with claim 2 or 3, comprising, before or after the second measurement:
- controlling the second auxiliary circuit into the closed state;
- performing a third measurement (M3) of the output signal from the assembly;
- establishing a weight (P), a front-rear offset, and a right-left offset of a user, based on the first, second, and third measurements (M1, M2, M3).

12. Method according to claim 10, in combination with claim 2, comprising, before or after any among the first or second measurement:
- controlling the second auxiliary circuit into the closed state;
- performing a third measurement (M3) of the output signal from the assembly;
- establishing at least a weight (P) of a user and the bending of a plate of the weighing device, based on the first, second, and third measurements (M1, M2, M3).

13. Method according to claim 11, in combination with claim 4, comprising, before or after any among the first, second, or third measurement:
- controlling the third auxiliary circuit (56) into the closed state;
- performing a fourth measurement (M4) of the output signal from the assembly; and
- establishing the weight, front-rear offset, right-left offset of a user and the bending of a plate of the weighing device, based on the first, second, third, and fourth measurements (M1, M2, M3, M4).

14. Method according to any one of claims 10 to 13, wherein the front-rear and/or right-left offset allows at least one among: an interaction of the bathroom scale with a user, a cleaning of the ballistocardiography (BCG) signal, and/or an analysis of the user's balance on the bathroom scale.

15. Method according to any one of claims 10 to 14, further comprising a step of controlling an electronic system, using the obtained offset information.
